# EUROPEAN PATENT APPLICATION

(11) **EP 4 024 738 A1**
(43) Date of publication of application: **06.07.2022**
(21) Application number: 19946713.5
(22) Date of filing: 29.09.2019
(51) Int. Cl.: H04L 5/00

(54) **SIGNAL RECEIVING METHOD AND APPARATUS, AND SIGNAL SENDING METHOD AND APPARATUS**

(71) Applicant: Huawei Technologies Co., Ltd., Longgang District Shenzhen, Guangdong 518129 (CN)
(72) Inventor: JIA, Qiong, Shenzhen, Guangdong 518129 (CN); ZHANG, Jiayin, Shenzhen, Guangdong 518129 (CN)
(74) Representative: Gill Jennings & Every LLP
(86) International application number: PCT/CN2019/109229
(87) International publication number: WO 2021/056580

(57) **Abstract**

Embodiments of this application disclose a signal receiving method, a signal sending method, and an apparatus, which may be applied to a communication system, for example, a V2X communication system, an LTE-V communication system, a V2V communication system, an internet of vehicles communication system, an MTC communication system, an IoT communication system, an LTE-M communication system, an M2M communication system, or an internet of things communication system. The signal receiving method includes: A network device sends scheduling information to a terminal device, where the scheduling information includes first indication information for time domain positions of M time units, and M is an integer greater than 1; and receives a first signal in N time units in the M time units, where N is an integer greater than 0 and not greater than M. According to the method and the apparatus provided in the embodiments of this application, at least two different types of signals can be received or sent in a plurality of time units. This improves communication efficiency.

## Description

### TECHNICAL FIELD

This application relates to the communication field, and in particular, to a signal receiving method, a signal sending method, and an apparatus.

### BACKGROUND

Rapid development of wireless communication technologies leads to an increasing shortage of spectrum resources, driving exploration on unlicensed frequency bands. The 3rd generation partnership project (3rd generation partnership project, 3GPP) introduces a licensed assisted access (License Assisted Access, LAA for short) technology and an enhanced licensed assisted access (enhanced LAA, eLAAfor short) technology in Release-13 (Release-13, R-13 for short) and Release-14 respectively. That is, a long term evolution (Long Term Evolution, LTE) system/an LTE-advanced (LTE-advanced, LTE-A for short) system is deployed on an unlicensed spectrum in a non-standalone (Non-standalone) manner, and utilization of unlicensed spectrum resources is maximized with assistance of a licensed spectrum.

A multi-time unit scheduling solution is a solution in which a plurality of time units are scheduled by using one piece of scheduling indication information. A multi-time unit scheduling scenario that is currently being studied is a scenario in which a network device such as a base station (for example, an eNodeB) sends one piece of scheduling indication information to a terminal device (for example, a mobile phone), to indicate the terminal device to perform uplink transmission in a plurality of time units. In other words, by sending the one piece of scheduling indication information to the terminal device, the network device can indicate the terminal device to occupy a licensed spectrum or an unlicensed spectrum in the plurality of time units to feed back data required by the network device. It may be understood that a plurality of time units are scheduled by using one piece of scheduling indication information, so that signaling consumption can be effectively reduced. Therefore, a solution needs to be studied, in which the network device accurately indicates, by using one piece of scheduling information, the terminal device to feed back information required by the network device to the network device in a plurality of time units.

### SUMMARY

Embodiments of this application disclose a signal receiving method, a signal sending method, and an apparatus, which may be applied to a communication system, for example, a vehicle-to-everything (vehicle-to-everything, V2X) communication system, a vehicle-to-vehicle (vehicle-to-vehicle, V2V) communication system, a long term evolution-vehicle (long term evolution-vehicle, LTE-V) communication system, an internet of vehicles communication system, a machine type communication (machine type communication, MTC) communication system, an internet of things (internet of things, IoT) communication system, a long term evolution-machine (long term evolution-machine, LTE-M) communication system, a machine-to-machine (machine-to-machine, M2M) communication system, or the like. In this way, at least two different types of signals can be received or sent in a plurality of time units. This improves communication efficiency.

According to a first aspect, an embodiment of this application provides a signal receiving method. The method may include: A network device sends scheduling information to a terminal device, where the scheduling information includes first indication information, the first indication information is used to indicate time domain positions of M time units, and M is an integer greater than 1; and receives a first signal in N time units in the M time units, where N is an integer greater than 0 and not greater than M.

The scheduling information may be downlink control information (downlink control information, DCI), may be radio resource control (radio resource control, RRC) signaling, or may be other scheduling signaling. Optionally, a signal received in any one of the M time units except the N time units is not the first signal. Preferably, M is greater than N. In other words, the network device receives the first signal only in the N time units in the M time units. The network device may receive at least two types of signals in the M time units. For example, the network device receives the first signal in the N time units, and receives a second signal in (M-N) time units in the M time units except the N time units, and the first signal is different from the second signal. The first signal may include only channel state information (channel state information, CSI), may include only uplink data, may include CSI and uplink data, or may be another signal. This is not limited in this application. Optionally, the signal receiving method provided in this embodiment of this application is applied to an unlicensed spectrum scenario. That is, the network device receives the first signal on an unlicensed spectrum. It may be understood that the network device may receive at least two different types of signals in a plurality of time units. In this way, the network device may receive at least two types of signals in one time of uplink transmission of the terminal device. This can effectively reduce a quantity of times of sending uplink transmission by the terminal device and a quantity of times of receiving data by the network device, so that communication efficiency is high.

In this embodiment of this application, the network device receives at least two types of signals in one time of uplink transmission of the terminal device, so that communication efficiency can be effectively improved.

In an optional implementation, the first signal includes channel state information CSI and/or uplink data.

It may be understood that the first signal may include only the CSI, may include only the uplink data, or may include both the CSI and the uplink data. The uplink data may be any data sent by the terminal device to the network device. When the first signal includes the CSI, the network device may receive both the CSI and another signal, and the network device may correspondingly adjust a scheduling policy of the network device based on the CSI. When the first signal does not include the CSI, the network device may receive both of two different types of signals, so that communication efficiency is high.

In an optional implementation, the first indication information includes a first index, and time domain positions indicated by using the first index in a first configuration list are the time domain positions of the M time units. The first configuration list is configured by the network device for the terminal device, the first configuration list is preset by a system, or the first configuration list is stored in the terminal device.

Optionally, the first indication information may be a time domain resource allocation (time domain resource assignment, TDRA) field defined in 3GPP 38.212. For example, the first configuration list may be a physical uplink shared channel (physical uplink shared channel, PUSCH) time domain resource allocation list. The network device may indicate the time domain positions of the M time units by using the first index. The terminal device may search the first configuration list for the time domain positions indicated by using the first index, to obtain the time domain positions of the M time units. The first index may be a codepoint (codepoint) or a value corresponding to the first indication information. For example, if the codepoint corresponding to the first indication information is equal to 0, the terminal device searches the first configuration list for the first row of configuration information, to obtain time domain positions of a plurality of time units. For example, four consecutive time units scheduled by the network device are obtained, and an offset of the first time unit, relative to a slot 1 in which the scheduling information is received, in the four time units is two slots. That is, the plurality of time units are located in a slot 3, a slot 4, a slot 5, and a slot 6. The terminal device receives the scheduling information in the slot 1, and each time unit is one slot. Optionally, the network device configures the first configuration list by sending RRC signaling to the terminal device. Alternatively, optionally, the first configuration list is preset by a system.

Optionally, the terminal device may search, based on the first index, a time offset list indicated in CSI reporting configuration information for a time domain position of a time unit used for CSI reporting. It may be understood that the terminal device may obtain one or more pieces of CSI reporting configuration information or one or more sets of pieces of CSI reporting configuration information based on the scheduling information. If each piece of CSI reporting configuration information or each set of pieces of CSI reporting configuration information corresponds to a plurality of time offset lists, one or more time offset values are selected according to a specific rule from a plurality of time offset values found in the plurality of time offset lists, for example, a maximum time offset value or a minimum time offset value is selected. For example, the CSI reporting configuration information may be indicated by using a CSI-ReportConfig defined in 3GPP 38.331, and the time offset list is indicated by using a reportSlotOffsetList. It may be understood that the terminal device may search the first configuration list for the time domain positions of the M time units by using the first index, or may search, by using the first index, the time offset list indicated by using the CSI reporting configuration information for time domain positions of the N time units.

In this implementation, the time domain positions of the M time units are indicated by using a combination of the first index and the first configuration list. When the time domain positions of the M time units are accurately indicated, indication information carried in the scheduling information can be reduced.

In an optional implementation, the scheduling information further includes second indication information, and the second indication information is used to indicate time domain positions of the N time units.

In this implementation, the scheduling information further includes the second indication information used to indicate the time domain positions of the N time units, so that the terminal device accurately and quickly determines the time domain positions of the N time units based on the second indication information.

In an optional implementation, the second indication information includes a second index, and time domain positions indicated by using the second index in a second configuration list are the time domain positions of the N time units. The second configuration list is configured by the network device for the terminal device, the second configuration list is preset by a system, or the second configuration list is stored in the terminal device.

The second configuration list may be a time offset list indicated in CSI reporting configuration information. For example, the CSI reporting configuration information may be indicated by using a CSI-ReportConfig defined in 3GPP 38.331, and the time offset list is indicated by using a reportSlotOffsetList. For example, the terminal device may obtain N CSI-ReportConfigs based on the scheduling information, to further obtain N corresponding reportSlotOffsetLists, and then search each reportSlotOffsetList for a time offset value indicated by using the second index, to obtain one or more time offset values (namely, offset information). For example, for the first reportSlotOffsetList or the first set of reportSlotOffsetLists, a time offset value obtained based on the second index is 3; and for the second reportSlotOffsetList or the second set of reportSlotOffsetLists, a time offset value obtained based on the second index is 4. It indicates that offsets of time units, separately relative to a slot 1 in which the scheduling information is received, are three slots and four slots, and the time units are used for CSI sending. That is, the time units are a slot 4 and a slot 5. Optionally, in this implementation, the first signal may include only the CSI.

In this implementation, the time domain positions of the N time units are indicated by using a combination of the second index and the second configuration list. When the time domain positions of the N time units are accurately indicated, indication information carried in the scheduling information can be reduced.

In an optional implementation, the second indication information indicates that a quantity of time units used for sending the first signal is N. Optionally, the second indication information includes quantity information N, used to indicate that the quantity of time units for sending the first signal is N.

The terminal device may determine, according to a preset rule, the N time units, in the M time units, that are used for sending the first signal. For example, the first N time units or the last N time units in the M time units are used for sending the first signal. In this implementation, the first signal may include the CSI and the uplink data. It may be understood that when the time domain positions of the M time units are known, time domain positions of the first N time units in the M time units can also be known. In this implementation, the quantity information included in the scheduling information can accurately indicate the time domain positions of the N time units, and a quite small quantity of bits or bytes are occupied, thereby reducing signaling consumption.

In an optional implementation, the second indication information indicates the positions, of the N time units, relative to the positions of the M time units.

Optionally, the second indication information includes one or more time offset values. For example, the N time units are consecutive, the second indication information includes one time offset value, and the time offset value is used to indicate a position, of the first time unit or the last time unit in the N time units, relative to the positions of the M time units. For another example, if N is 4, and time offset values included in the second indication information are 1, 3, 5, and 6 in sequence, the second indication information indicates that the first, third, fifth, and sixth time units in the M time units are time units included in the N time units. Optionally, the second indication information includes a bitmap (bitmap), the bitmap includes M bits, each bit corresponds to one of the M time units, and each bit indicates whether to send the first signal in one time unit. Assuming that M is 4, "1001" indicates that the first signal is sent in the first time unit and the fourth time unit. That is, the N time units include the first time unit and the fourth time unit. In this implementation, the first signal may include the CSI and the uplink data. It may be understood that when the time domain positions of the M time units and the positions, of the N time units, relative to the positions of the M time units are known, the time domain positions of the N time units can be quickly and accurately known.

In an optional implementation, the scheduling information further includes third indication information, and the third indication information is used to indicate, in the N time units, a time unit used for sending only the CSI and/or a time unit used for sending the CSI and the uplink data.

Optionally, the network device uses a UL-SCH indicator (which corresponds to the third indication information) defined in 3GPP 38.212 to indicate whether only the CSI is transmitted or the CSI and the data are transmitted together in each of the N time units. Optionally, the third indication information is a newly defined field in the scheduling information. The third indication information may indicate, in the N time units for performing CSI reporting, specific time units in which only the CSI is transmitted and specific time units in which the CSI and the uplink data are transmitted. For example, the third indication information may be indicated, in a bitmap manner, by using a bitmap including N bits, and each bit corresponds to one time unit. Assuming that there are two time units for performing CSI reporting, "10" indicates that only the CSI (that is, CSI only) is sent in the first time unit of the two time units, and the CSI and the uplink data are sent in the other time unit. In some application scenarios, one CSI feedback may not need to occupy one time unit. In this case, the terminal device may send both the CSI and the data in a same time unit, to improve resource utilization. During actual application, the network device may indicate, based on an actual requirement, the terminal device to transmit only the CSI in some time units, and transmit both the CSI and the data in other time units, so that time-frequency resources can be more fully utilized.

In this implementation, different types of data transmitted by the terminal device in the N time units can be accurately indicated, so that resource utilization is improved.

In an optional implementation, the scheduling information further includes fourth indication information, and the fourth indication information is used to indicate N pieces of CSI reporting configuration information.

The fourth indication information may correspond to N codepoints (codepoints)/values (values), each codepoint/value indicates one piece of CSI reporting configuration information or one set of pieces of CSI reporting configuration information, and the N codepoints/values indicate N pieces of CSI reporting configuration information or N sets of pieces of CSI reporting configuration information. The codepoint/value indicates a codepoint or a value. The fourth indication information may correspond to N numeric values, and the N numeric values may be referred to as N codepoints, or may be referred to as N values. In other words, the codepoint and the value may be considered a same concept, and both represent numerical values. A codepoint/value corresponding to one piece of indication information refers to one or more numeric values corresponding to the indication information.

For example, the fourth indication information includes N subfields, and each subfield corresponds to one codepoint/value. For example, a list of the CSI reporting configuration information may be configured in RRC signaling, and then may be indicated by using a combination of a field (namely, the fourth indication information) in the scheduling information and the RRC signaling. That is, the codepoint/value corresponding to the fourth indication information is associated with the CSI reporting configuration information defined in the RRC. The network device may configure the CSI reporting configuration information of the terminal device by using the RRC signaling. The terminal device may determine one piece of CSI reporting configuration information or one set of pieces of CSI reporting configuration information by using one codepoint/value corresponding to the fourth indication information. For example, the terminal device is configured with a plurality of pieces of CSI reporting configuration information or a plurality of sets of pieces of CSI reporting configuration information, each piece of CSI reporting configuration information or each set of pieces of CSI reporting configuration information is associated with one codepoint/value, and the terminal device may determine one piece of CSI reporting configuration information or one set of pieces of CSI reporting configuration information based on each codepoint/value corresponding to the fourth indication information, to perform a CSI feedback. Optionally, a system of the terminal device has a preset list of CSI reporting configuration information, and the fourth indication information may be indicated by using an index of the CSI reporting configuration information. The fourth indication information includes one or more pieces of index information, and the terminal device may learn, based on the index information, of configuration information required for performing CSI reporting. Optionally, the scheduling information is one piece of DCI. One piece of CSI reporting configuration information may include a combination of one or more of the following information: a CSI reporting type, CSI reporting time information (which may be one or more combinations of a periodicity, a time offset relative to specific time, absolute time, or the like), CSI resource information (which may be resource information used to perform CSI measurement, for example, resource information of a channel state information-reference signal (channel state information-reference signal, CSI-RS), resource information that corresponds to a synchronization signal block (synchronization signal block, SSB) and that is used to perform CSI measurement, and/or resource information used to perform interference measurement), or the like. In this implementation, the fourth indication information is used to indicate the N pieces of CSI reporting configuration information or the N sets of pieces of CSI reporting configuration information, so that the terminal device reports required CSI in the N time units.

In an optional implementation, the scheduling information further includes fifth indication information, and the fifth indication information is used to indicate the terminal device to perform CSI reporting.

For example, the fifth indication information may use a CSI request field defined in 3GPP 38.212. Optionally, the fifth indication information may alternatively use a 1-bit (bit) field to indicate whether the terminal device needs to perform CSI reporting. For example, a bit "0" is used to indicate that the terminal device does not need to perform CSI reporting, and a bit "1" is used to indicate that the terminal device needs to perform CSI reporting. Alternatively, there may be another indication manner. This is not limited in the present invention.

According to a second aspect, an embodiment of this application provides a signal sending method. The method may include: A terminal device receives scheduling information from a network device, where the scheduling information includes first indication information, the first indication information is used to indicate time domain positions of M time units, and M is an integer greater than 1; and sends a first signal to the network device in N time units in the M time units, where N is an integer greater than 0 and not greater than M.

Preferably, M is greater than N. Optionally, a signal sent by the terminal device in any one of the M time units except the N time units is not the first signal. In other words, in one uplink transmission process, the terminal device may send different types of signals in different time units. In this way, the terminal device may send a plurality of signals to the network device through one time of uplink transmission, so that a quantity of times of performing uplink transmission by the terminal device can be effectively reduced, thereby improving communication efficiency.

In this embodiment of this application, in one uplink transmission process, the terminal device sends at least two different types of signals in a plurality of time units, so that communication efficiency can be effectively improved.

In an optional implementation, the first signal includes channel state information CSI and/or uplink data.

It may be understood that the first signal may include only the CSI, may include only the uplink data, or may include both the CSI and the uplink data. When the first signal includes the CSI, the network device may receive both the CSI and another signal, and the network device may correspondingly adjust a scheduling policy based on the CSI. When the first signal does not include the CSI, the network device may receive both of two different types of signals, so that communication efficiency is high.

In an optional implementation, and before the sending a first signal to the network device in N time units in the M time units, the method further includes: The terminal device listens to a target channel, and determines that the target channel is in a spatial state; and the sending a first signal to the network device in N time units in the M time units includes: sending the first signal in the N time units through the target channel.

A spectrum corresponding to the target channel may be an unlicensed spectrum. Optionally, the target channel belongs to a physical uplink shared channel. In this implementation, when detecting that the target channel is in the spatial state, the terminal device performs uplink transmission in a plurality of time units through the target channel, so that reliability is high.

In an optional implementation, the first indication information includes a first index, and time domain positions indicated by using the first index in a first configuration list are the time domain positions of the M time units. The first configuration list is configured by the network device for the terminal device, the first configuration list is preset by a system, or the first configuration list is stored in the terminal device.

The terminal device may parse the first indication information to obtain the first index; and search the first configuration list for the time domain positions indicated by using the first index, to obtain the time domain positions of the M time units.

In this implementation, the terminal device determines the time domain positions of the M time units by using a combination of the first index and the first configuration list, so that the time domain positions of the M time units can be accurately determined, and the scheduling information carries relatively little indication information.

In an optional implementation, the scheduling information further includes second indication information, and the second indication information is used to indicate time domain positions of the N time units.

The second indication information may indicate the time domain positions of the N time units. In this implementation, the scheduling information includes the second indication information for the time domain positions of the N time units, so that the terminal device accurately and quickly determines the time domain positions of the N time units based on the second indication information.

In an optional implementation, the second indication information includes a second index, and time domain positions indicated by using the second index in a second configuration list are the time domain positions of the N time units. The second configuration list is configured by the network device for the terminal device, the second configuration list is preset by a system, or the second configuration list is stored in the terminal device.

In this implementation, the terminal device determines the time domain positions of the N time units by using a combination of the second index and the second configuration list, so that the time domain positions of the N time units can be accurately determined, and the scheduling information carries relatively little indication information.

In an optional implementation, the second indication information indicates that a quantity of time units used for feeding back the first signal is N. Optionally, the second indication information includes quantity information N, used to indicate that the quantity of time units for sending the first signal is N.

The terminal device may determine, according to a preset rule, the N time units, in the M time units, that are used for sending the first signal. For example, the first N time units or the last N time units in the M time units are used for sending the first signal. In this implementation, the first signal may include the CSI and the uplink data. It may be understood that when the time domain positions of the M time units are known, time domain positions of the first N time units in the M time units can also be known. In this implementation, the quantity information included in the scheduling information can accurately indicate the time domain positions of the N time units, and a quite small quantity of bits or bytes are occupied, thereby reducing signaling consumption.

In an optional implementation, the second indication information indicates the positions, of the N time units, relative to the positions of the M time units.

Optionally, the second indication information includes one or more time offset values. Optionally, the second indication information includes a bitmap (bitmap), the bitmap includes M bits, each bit corresponds to one of the M time units, and each bit indicates whether to send the first signal in one time unit. Assuming that M is 4, "1001" indicates that the first signal is sent in the first time unit and the fourth time unit. That is, the N time units include the first time unit and the fourth time unit. In this implementation, the first signal may include the CSI and the uplink data. It may be understood that when the time domain positions of the M time units and the positions, of the N time units, relative to the positions of the M time units are known, the time domain positions of the N time units can be quickly and accurately known.

In an optional implementation, the first signal includes the CSI and does not include the uplink data; and before the sending a first signal to the network device in N time units in the M time units, the method further includes: determining the time domain positions of the M time units based on a first configuration list and/or the first indication information; and determining the time domain positions of the N time units based on a second configuration list and/or the second indication information, where the first configuration list is configured by the network device for the terminal device, the first configuration list is preset by a system, or the first configuration list is stored in the terminal device; and the second configuration list is configured by the network device for the terminal device, the second configuration list is preset by a system, or the second configuration list is stored in the terminal device.

For example, the first configuration list may be a PUSCH time domain resource allocation list. Optionally, the first indication information includes a first index. The network device may indicate the time domain positions of the M time units by using the first index. The terminal device may search the first configuration list for time domain positions indicated by using the first index, to obtain the time domain positions of the M time units. The first index may be a codepoint/value corresponding to the first indication information. Optionally, the second indication information includes a second index. The terminal device may search, based on the second index, a time offset list indicated in CSI reporting configuration information for a time domain position of a time unit used for CSI reporting, to obtain the time domain positions of the N time units. Optionally, the second indication information is implicit in the first indication information. The terminal device may search, based on the first index, the time offset list indicated in the CSI reporting configuration information for the time domain position of the time unit used for CSI reporting, to obtain the time domain positions of the N time units. It may be understood that the terminal device may obtain a plurality of pieces of CSI reporting configuration information or a plurality of sets of pieces of CSI reporting configuration information based on the scheduling information. If each piece of reporting configuration information or each set of pieces of reporting configuration information corresponds to a plurality of time offset lists, one or more time offset values are selected according to a specific rule from a plurality of time offset values found in the plurality of time offset lists, for example, a maximum time offset value or a minimum time offset value is selected. For example, the CSI reporting configuration information may be indicated by using a CSI-ReportConfig defined in 3GPP 38.331, and the time offset list is indicated by using a parameter reportSlotOffsetList. It may be understood that the terminal device may search the first configuration list for the time domain positions of the M time units by using the first index, or may search, by using the first index or the second index, the time offset list indicated by using the CSI reporting configuration information for the time domain positions of the N time units. Optionally, the first indication information is used to indicate time offsets of the time domain positions, of the M time units, separately relative to a slot in which the scheduling information is received. For example, the first indication information is used to indicate that offsets of four time units, separately relative to a slot 1 in which the terminal device receives the scheduling information, are three slots, four slots, five slots, and six slots, and in this case, the two time units are a slot 4, a slot 5, a slot 6, and a slot 7. Optionally, the second indication information is used to indicate time offsets of the time domain positions, of the N time units, separately relative to a slot in which the scheduling information is received. For example, the second indication information is used to indicate that offsets of two time units, separately relative to a slot 1 in which the terminal device receives the scheduling information, are three slots and four slots, and in this case, the two time units are a slot 4 and a slot 5.

In this implementation, the time domain position of the time unit can be quickly and accurately determined based on the indication information and/or the configuration list.

In an optional implementation, the first signal includes the uplink data; and before the sending a first signal to the network device in N time units in the M time units, the method further includes: determining the time domain positions of the M time units based on a first configuration list and/or the first indication information; and determining the time domain positions of the N time units based on the time domain positions of the M time units and/or the second indication information, where the first configuration list is configured by the network device for the terminal device, the first configuration list is preset by a system, or the first configuration list is stored in the terminal device.

For example, the first configuration list may be a PUSCH time domain resource allocation list. Optionally, the first indication information includes a first index. The network device may indicate the time domain positions of the M time units by using the first index. The terminal device may search the first configuration list for time domain positions indicated by using the first index, to obtain the time domain positions of the M time units. The first index may be a codepoint/value corresponding to the first indication information.

Optionally, the second indication information indicates that a quantity of time units used for feeding back the first signal is N. For example, the second indication information includes quantity information N, used to indicate that the quantity of time units for sending the first signal is N. The terminal device may determine, according to a preset rule, the N time units, in the M time units, that are used for sending the first signal. For example, the first N time units or the last N time units in the M time units are used for sending the first signal. In other words, the terminal device may determine, according to a preset rule and based on the second indication information, specific N time units, in the M time units, that are used for sending the first signal.

Optionally, the second indication information is used to indicate the positions, of the N time units, relative to the positions of the M time units. In this way, after the time domain positions of the M time units are known, the terminal device may determine the time domain positions of the N time units based on the second indication information. Optionally, the second indication information includes one or more time offset values, and the time offset values may indicate the positions, of the N time units, relative to the positions of the M time units. For example, if N is 4, and time offset values included in the second indication information are 1, 3, 5, and 6 in sequence, the second indication information indicates that the first, third, fifth, and sixth time units in the M time units are time units included in the N time units. Optionally, the second indication information includes a bitmap (bitmap), the bitmap includes M bits, each bit corresponds to one of the M time units, and each bit indicates whether to send the first signal in one time unit. Assuming that M is 4, "1001" indicates that the first signal is sent in the first time unit and the fourth time unit. That is, the N time units include the first time unit and the fourth time unit.

Optionally, the second indication information is used to indicate time offsets of the time domain positions, of the N time units, separately relative to a slot in which the scheduling information is received.

In this implementation, the terminal device first determines the time domain positions of the M time units, and then determines the time domain positions of the N time units based on the positions of the M time units and/or the second indication information, so that the time domain position of each time unit can be quickly determined.

In an optional implementation, the first signal includes the uplink data; and before the sending a first signal to the network device in N time units in the M time units, the method further includes:
determining the time domain positions of the M time units based on a first configuration list and/or the first indication information; and determining the time domain positions of the N time units based on the first configuration list and/or the second indication information, where the first configuration list is configured by the network device for the terminal device, the first configuration list is preset by a system, or the first configuration list is stored in the terminal device.

In this implementation, the terminal device may determine the time domain position of each time unit based on the first configuration list, and a plurality of configuration lists do not need to be configured, so that implementation is simple.

In an optional implementation, the scheduling information further includes third indication information, and the third indication information is used to indicate, in the N time units, a time unit used for sending only the CSI and/or a time unit used for sending the CSI and the uplink data.

Optionally, the network device uses a UL-SCH indicator (which corresponds to the third indication information) defined in 3GPP 38.212 to indicate whether only the CSI is transmitted or the CSI and the uplink data are transmitted in each of the N time units. Optionally, the third indication information is a newly defined field in the scheduling information. The third indication information may indicate, in the N time units for performing CSI reporting, specific time units in which only the CSI is transmitted and specific time units in which the CSI and the uplink data are transmitted. For example, the third indication information may be indicated, in a bitmap manner, by using a bitmap including N bits, and each bit corresponds to one time unit. Assuming that there are two time units for performing CSI reporting, "10" indicates that only the CSI (that is, CSI only) is sent in the first time unit of the two time units, and the CSI and the uplink data are sent in the other time unit. In some application scenarios, one CSI feedback may not occupy one time unit. In this case, both the CSI and the data may be sent in a same time unit, to improve resource utilization. During actual application, the network device may indicate, based on an actual requirement, the terminal device to transmit only the CSI in some time units, and transmit both the CSI and the data in other time units, so that time-frequency resources can be more fully utilized.

In an optional implementation, the scheduling information further includes fourth indication information, and the fourth indication information is used to indicate N pieces of CSI reporting configuration information.

The fourth indication information may correspond to N codepoints (codepoints)/values, and each codepoint/value indicates one piece of CSI reporting configuration information or one set of pieces of CSI reporting configuration information. In other words, the fourth indication information indicates N pieces of CSI reporting configuration information or N sets of pieces of CSI reporting configuration information. For example, the fourth indication information includes N subfields, and each subfield corresponds to one codepoint/value. For example, the fourth indication information may be configured in RRC signaling, and then may be indicated by using a combination of a field (namely, the fourth indication information) in the scheduling information and the RRC signaling. That is, the codepoint/value corresponding to the fourth indication information is associated with the CSI reporting configuration information defined in the RRC. The network device may configure the CSI reporting configuration information of the terminal device by using the RRC signaling. The terminal device may determine one piece of CSI reporting configuration information or one set of pieces of CSI reporting configuration information by using one codepoint/value corresponding to the fourth indication information. For example, the terminal device is configured with a plurality of pieces of CSI reporting configuration information or a plurality of sets of pieces of CSI reporting configuration information, each piece of CSI reporting configuration information or each set of pieces of CSI reporting configuration information is associated with one codepoint/value, and the terminal device may determine one piece of CSI reporting configuration information or one set of pieces of CSI reporting configuration information based on each codepoint/value corresponding to the fourth indication information, to perform a CSI feedback. Optionally, a system of the terminal device has a preset list of CSI reporting configuration information, and the fourth indication information may be indicated by using an index of the CSI reporting configuration information. The fourth indication information includes one or more pieces of index information, and the terminal device may learn, based on the index information, of configuration information required for performing CSI reporting. Optionally, the scheduling information is one piece of DCI.

In this implementation, the fourth indication information included in the scheduling information is used to indicate the N pieces of CSI reporting configuration information, so that the terminal device reports a plurality of pieces of CSI in one time of uplink transmission based on the fourth indication information, and efficiency is high.

In an optional implementation, the scheduling information further includes fifth indication information, and the fifth indication information is used to indicate the terminal device to perform CSI reporting.

For example, the fifth indication information may use a CSI request field defined in 3GPP 38.212. Optionally, the fifth indication information may alternatively use a 1-bit (bit) field to indicate whether the terminal device needs to perform CSI reporting. For example, a bit "0" is used to indicate that the terminal device does not need to perform CSI reporting, and a bit "1" is used to indicate that the terminal device needs to perform CSI reporting. Alternatively, there may be another indication manner. This is not limited in the present invention.

In this implementation, the terminal device can accurately determine, based on the fifth indication information, whether the CSI needs to be reported.

According to a third aspect, an embodiment of this application provides another signal receiving method. The method may include: A network device receives a first signal in N time units in M time units, where M is an integer greater than 1, and N is an integer greater than 1 and not greater than M.

A signal received by the network device in any one of the M time units except the N time units is not the first signal. In other words, the network device receives the first signal only in the N time units in the M time units. In one time of uplink transmission of a terminal device, the network device may receive the first signal in a plurality of time units, and receive other data or another signal in another time unit. Optionally, the signal receiving method provided in this embodiment of this application is applied to an unlicensed spectrum scenario. That is, the network device receives the first signal on an unlicensed spectrum.

In this embodiment of this application, the network device receives at least two types of signals in one time of uplink transmission of the terminal device, so that communication efficiency can be effectively improved.

In an optional implementation, the first signal includes channel state information CSI and/or uplink data.

When the first signal includes the CSI, the network device may receive both the CSI and another signal, and the network device may correspondingly adjust a scheduling policy based on the CSI. When the first signal does not include the CSI, the network device may receive both of two different types of signals, so that communication efficiency is high.

In an optional implementation, before that a network device receives a first signal in N time units in M time units, the method further includes: receiving uplink control information from the terminal device, where the uplink control information includes indication information of time domain positions of the N time units; and determining the time domain positions of the N time units based on the uplink control information.

Optionally, the terminal device may select, on an unlicensed spectrum based on a result of listen before talk (listen before talk, LBT), to send the first signal in a time unit in which the LBT succeeds, and indicate, to the network device, a time domain position of the time unit in which the first signal is reported. Optionally, the uplink control information further includes indication information of time domain positions of the M time units.

In this implementation, the network device can quickly and accurately determine the time domain position of the time unit for CSI reporting based on the uplink control information.

In an optional implementation, the indication information includes a target index; and the determining the time domain positions of the N time units based on the uplink control information includes: determining the time domain positions of the N time units based on a fourth configuration list and the target index, where the fourth configuration list is preset by a system, or the fourth configuration list is stored in the network device.

The network device may search the fourth configuration list for time domain positions indicated by using the target index, to obtain the time domain positions of the N time units.

In this implementation, the network device can accurately determine the time domain positions of the N time units by using a combination of the fourth configuration list and the target index.

According to a fourth aspect, an embodiment of this application provides another signal sending method. The method may include: A terminal device sends a first signal to a network device in N time units in M time units, where M is an integer greater than 1, and N is an integer greater than 1 and not greater than M.

In this embodiment of this application, in one uplink transmission process, the terminal device sends at least two different types of signals in a plurality of time units, so that communication efficiency can be effectively improved.

In an optional implementation, the first signal includes channel state information CSI and/or uplink data.

When the first signal includes the CSI, the network device may receive both the CSI and another signal, and the network device may correspondingly adjust a scheduling policy based on the CSI. When the first signal does not include the CSI, the network device may receive both of two different types of signals, so that communication efficiency is high.

In an optional implementation, that a terminal device sends a first signal to a network device in N time units in M time units includes: The terminal device listens to an unlicensed spectrum; selects, based on a result of listen before talk LBT, the N time units in which the LBT succeeds; and sends the first signal in the N time units.

In this implementation, the CSI is reported in the N time units in which the LBT succeeds, so that reliability is high.

According to a fifth aspect, an embodiment of this application provides a network device. The network device includes: a sending unit, configured to send scheduling information, where the scheduling information includes first indication information, the first indication information is used to indicate time domain positions of M time units, and M is an integer greater than 1; and a receiving unit, configured to receive a first signal in N time units in the M time units, where N is an integer greater than 0 and not greater than M.

In an optional implementation, the first signal includes channel state information CSI and/or uplink data.

In an optional implementation, the first indication information includes a first index, and time domain positions indicated by using the first index in a first configuration list are the time domain positions of the M time units. The first configuration list is configured by the network device for a terminal device, the first configuration list is preset by a system, or the first configuration list is stored in the terminal device.

In an optional implementation, the scheduling information further includes second indication information, and the second indication information is used to indicate time domain positions of the N time units.

In an optional implementation, the second indication information includes a second index, and time domain positions indicated by using the second index in a second configuration list are the time domain positions of the N time units. The second configuration list is configured by the network device for a terminal device, the second configuration list is preset by a system, or the second configuration list is stored in the terminal device.

In an optional implementation, the second indication information indicates that a quantity of time units used for sending the first signal is N. Optionally, the second indication information includes quantity information N, used to indicate that the quantity of time units for sending the first signal is N.

In an optional implementation, the second indication information indicates the positions, of the N time units, relative to the positions of the M time units.

In an optional implementation, the scheduling information further includes third indication information, and the third indication information is used to indicate, in the N time units, a time unit used for sending only the CSI and/or a time unit used for sending the CSI and the uplink data.

In an optional implementation, the scheduling information further includes fourth indication information, and the fourth indication information is used to indicate N pieces of CSI reporting configuration information.

In an optional implementation, the scheduling information further includes fifth indication information, and the fifth indication information is used to indicate the terminal device to perform CSI reporting.

According to a sixth aspect, an embodiment of this application provides a terminal device. The terminal device includes: a receiving unit, configured to receive scheduling information from a network device, where the scheduling information includes first indication information, the first indication information is used to indicate time domain positions of M time units, and M is an integer greater than 1; and a sending unit, configured to send a first signal to the network device in N time units in the M time units, where N is an integer greater than 0 and not greater than M.

In an optional implementation, the first signal includes channel state information CSI and/or uplink data.

In an optional implementation, the terminal device further includes: a listening unit, configured to listen to a target channel; and a determining unit, configured to determine that the target channel is in a spatial state, where the sending unit is specifically configured to send the first signal in the N time units through the target channel.

A spectrum occupied by the target channel may be an unlicensed spectrum. Optionally, the target channel belongs to a physical uplink shared channel. In this implementation, when detecting that the target channel is in the spatial state, the terminal device performs uplink transmission in a plurality of time units through the target channel, so that reliability is high.

In an optional implementation, the first indication information includes a first index, and time domain positions indicated by using the first index in a first configuration list are the time domain positions of the M time units. The first configuration list is configured by the network device for the terminal device, the first configuration list is preset by a system, or the first configuration list is stored in the terminal device.

In an optional implementation, the scheduling information further includes second indication information, and the second indication information is used to indicate time domain positions of the N time units.

In an optional implementation, the second indication information includes a second index, and time domain positions indicated by using the second index in a second configuration list are the time domain positions of the N time units. The second configuration list is configured by the network device for the terminal device, the second configuration list is preset by a system, or the second configuration list is stored in the terminal device.

In an optional implementation, the second indication information indicates that a quantity of time units used for feeding back the first signal is N. Optionally, the second indication information includes quantity information N, used to indicate that the quantity of time units for sending the first signal is N.

In an optional implementation, the second indication information indicates the positions, of the N time units, relative to the positions of the M time units.

In an optional implementation, the first signal includes the CSI and does not include the uplink data; and the terminal device further includes: a determining unit, configured to: determine the time domain positions of the M time units based on a first configuration list and/or the first indication information; and determine the time domain positions of the N time units based on a second configuration list and/or the second indication information.

In an optional implementation, the first signal includes the uplink data; and the terminal device further includes: a determining unit, configured to: determine the time domain positions of the M time units based on a first configuration list and/or the first indication information; and determine the time domain positions of the N time units based on the time domain positions of the M time units and/or the second indication information, where the first configuration list is configured by the network device for the terminal device, the first configuration list is preset by a system, or the first configuration list is stored in the terminal device; and the second configuration list is configured by the network device for the terminal device, the second configuration list is preset by a system, or the second configuration list is stored in the terminal device.

In an optional implementation, the first signal includes the uplink data; and the terminal device further includes: a determining unit, configured to: determine the time domain positions of the M time units based on a first configuration list and/or the first indication information; and determine the time domain positions of the N time units based on the first configuration list and/or the second indication information, where the first configuration list is configured by the network device for the terminal device, the first configuration list is preset by a system, or the first configuration list is stored in the terminal device.

In an optional implementation, the scheduling information further includes third indication information, and the third indication information is used to indicate, in the N time units, a time unit used for sending only the CSI and/or a time unit used for sending the CSI and the uplink data.

In an optional implementation, the scheduling information further includes fourth indication information, and the fourth indication information is used to indicate N pieces of CSI reporting configuration information.

In an optional implementation, the scheduling information further includes fifth indication information, and the fifth indication information is used to indicate the terminal device to perform CSI reporting.

According to a seventh aspect, an embodiment of this application provides a network device. The network device includes: a receiving unit, configured to receive a first signal in N time units in M time units, where M is an integer greater than 1, and N is an integer greater than 1 and not greater than M.

In an optional implementation, the first signal includes channel state information CSI and/or uplink data.

In an optional implementation, the receiving unit is further configured to receive uplink control information from a terminal device, where the uplink control information includes indication information of time domain positions of the N time units; and the network device further includes: a determining unit, configured to determine the time domain positions of the N time units based on the uplink control information.

In an optional implementation, the indication information includes a target index; and the determining unit is specifically configured to determine the time domain positions of the N time units based on a fourth configuration list and the target index, where the fourth configuration list is preset by a system, or the fourth configuration list is stored in the network device.

According to an eighth aspect, an embodiment of this application provides a terminal device. The terminal device includes: a sending unit, configured to send a first signal to a network device in N time units in M time units, where M is an integer greater than 1, and N is an integer greater than 1 and not greater than M.

In an optional implementation, the first signal includes channel state information CSI and/or uplink data.

In an optional implementation, the terminal device further includes: a listening unit, configured to listen to an unlicensed spectrum; and a selection unit, further configured to select, based on a result of listen before talk LBT, the N time units in which the LBT succeeds.

According to a ninth aspect, an embodiment of this application provides a communication device. The communication device includes a processor and a memory. The memory is configured to store a program. The processor is configured to execute the program stored in the memory. When the program is executed, the processor is configured to perform the signal receiving method according to the first aspect or the third aspect.

According to a tenth aspect, an embodiment of this application provides a communication apparatus. The communication apparatus includes a processor and an interface circuit. The interface circuit is configured to receive code instructions and transmit the code instructions to the processor. The processor runs the code instructions to perform the signal receiving method according to the first aspect or the third aspect.

According to an eleventh aspect, an embodiment of this application provides a communication apparatus. The communication device includes a processor and a memory. The memory is configured to store a program. The processor is configured to execute the program stored in the memory. When the program is executed, the processor is configured to perform the signal sending method according to the second aspect or the fourth aspect.

According to a twelfth aspect, an embodiment of this application provides a communication apparatus. The communication apparatus includes a processor and an interface circuit. The interface circuit is configured to receive code instructions and transmit the code instructions to the processor. The processor runs the code instructions to perform the signal sending method according to the second aspect or the fourth aspect.

According to a thirteenth aspect, an embodiment of this application provides a communication system. The communication system includes a network device and a terminal device. The network device may be configured to perform the method according to the first aspect, and the terminal device may be configured to perform the method according to the second aspect.

According to a fourteenth aspect, an embodiment of this application provides a communication system. The communication system includes a network device and a terminal device. The network device may be configured to perform the method according to the third aspect, and the terminal device may be configured to perform the method according to the fourth aspect.

According to a fifteenth aspect, an embodiment of this application provides a readable storage medium. The readable storage medium is configured to store instructions. When the instructions are executed, the method according to the first aspect or the third aspect is implemented.

According to a sixteenth aspect, an embodiment of this application provides a readable storage medium. The readable storage medium is configured to store instructions. When the instructions are executed, the method according to the second aspect or the fourth aspect is implemented.

According to a seventeenth aspect, an embodiment of this application provides a computer program product including instructions. When the instructions are executed, the method according to the first aspect or the third aspect is implemented.

According to an eighteenth aspect, an embodiment of this application provides a computer program product including instructions. When the instructions are executed, the method according to the second aspect or the fourth aspect is implemented.

### BRIEF DESCRIPTION OF DRAWINGS

To describe technical solutions in embodiments or the background of this application more clearly, the following describes the accompanying drawings used in the embodiments or the background of this application.
FIG. 1 is a schematic diagram of a network architecture according to an embodiment of this application;
FIG. 2 is a flowchart of a signal receiving method according to an embodiment of this application;
FIG. 3 is a flowchart of an interaction method between a network device and a terminal device according to an embodiment of this application;
FIG. 4 is a flowchart of another interaction method between a network device and a terminal device according to an embodiment of this application;
FIG. 5 is a schematic diagram of a signal sending method according to an embodiment of this application;
FIG. 6 is a schematic diagram of another signal sending method according to an embodiment of this application;
FIG. 7 is a schematic diagram of a structure of a network device according to an embodiment of this application;
FIG. 8 is a schematic diagram of a structure of a terminal device according to an embodiment of this application;
FIG. 9 is a schematic diagram of a structure of another network device according to an embodiment of this application;
FIG. 10 is a schematic diagram of a structure of another terminal device according to an embodiment of this application;
FIG. 11 is a schematic diagram of a structure of another network device according to an embodiment of this application; and
FIG. 12 is a schematic diagram of a structure of another terminal device according to an embodiment of this application.

### DESCRIPTION OF EMBODIMENTS

In embodiments of the specification, claims, and accompanying drawings of this application, the terms "first", "second", "third" and so on are intended to distinguish between similar objects but do not necessarily indicate a specific order or sequence. Moreover, the terms "include", "have", and any other variant thereof are intended to cover a non-exclusive inclusion, for example, including a series of steps or units. Methods, systems, products, or devices are not necessarily limited to those expressly listed steps or units, but may include other steps or units that are not expressly listed or that are inherent to such processes, methods, products, or devices. "And/or" is used for indicating that one or both of the two objects to which it is connected are selected. For example, "A and/or B" indicates A, B, or A+B.

The embodiments of this application disclose a signal receiving method, a signal sending method, a device, and a related device. A first signal in a multi-time unit scheduling scenario is reported by using an independent indication/joint indication for reporting data and the first signal. This avoids confusion of indication information reported by a network device and a terminal device for the first signal. The first signal includes CSI and/or uplink data. In other words, the network device (for example, a base station) may indicate, by using one piece of scheduling information, a plurality of time units in which the terminal device (for example, a mobile phone) performs uplink transmission, and indicate a specific time unit or specific time units in which the terminal device sends the first signal. To better understand the signal receiving method, the signal sending method, the device, and the related device disclosed in the embodiments of this application, the following first describes a network architecture to which the embodiments of this application are applicable. The method disclosed in the embodiments of this application may be applied to a 5G new radio access technology (New RAT (radio access technology), NR) system. The method may also be applied to another communication system, provided that there is an entity, in the communication system, that needs to indicate another entity to send the first signal in a specific time unit or specific time units in a plurality of time units, and/or that there is an entity that needs to receive or receive the first signal in a part of a plurality of time units in one time of transmission. The following first describes a network architecture to which the method disclosed in the embodiments of this application is applicable.

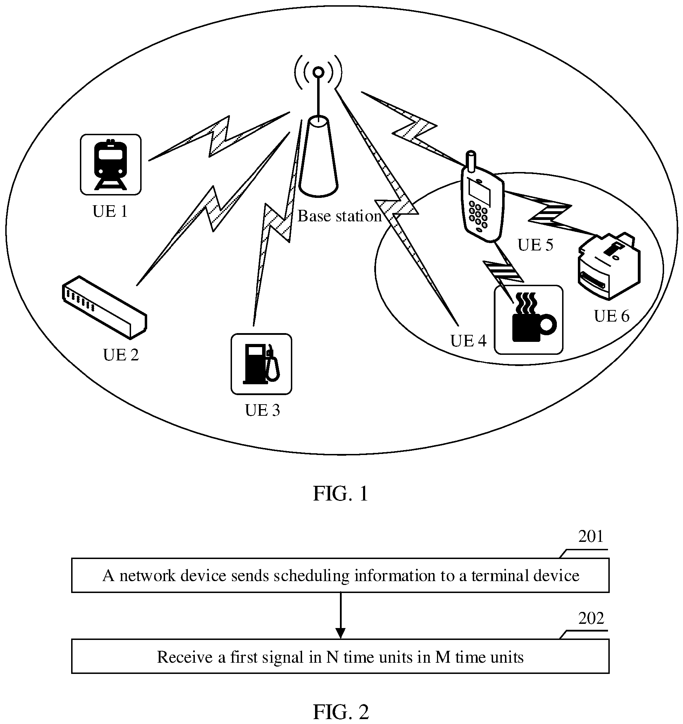

FIG. 1 is a schematic diagram of a network architecture according to an embodiment of this application. As shown in FIG. 1, the network architecture is applicable to a multi-time unit scheduling scenario, namely, a scenario in which a plurality of time units are occupied for sending data or signals in one time of uplink transmission or downlink transmission. A network device is an entity that is configured to transmit or receive a signal on a network side, for example, a gNB. A terminal device is an entity that is configured to receive or transmit signals on a user side, for example, a mobile phone. Because there is a large quantity of application scenarios for a base station and UE, the following uses a base station as an example of a network device, and uses user equipment (user equipment, UE) as an example of a terminal device. As shown in FIG. 1, a base station (base station) and UE 1 to UE 6 form a communication system. In the communication system, the base station may send scheduling information to the UE 1 to the UE 6, and the UE 1 to the UE 6 may report corresponding information based on the scheduling information. In addition, the UE 4 to the UE 6 may also form a communication system. In the communication system, the UE 5 may also send scheduling information to the UE 4 and the UE 6, and the UE 4 and the UE 6 may also send feedback information for the scheduling information to the UE 5. For example, the base station may send a CSI request, namely, a CSI report request indication (an example of the scheduling information), to the UE 1 to the UE 6, and the UE 1 to the UE 6 may perform CSI reporting based on the CSI request. In addition, the UE 4 to the UE 6 may also form a communication system. In the communication system, the UE 5 may also send a CSI request to the UE 4 and the UE 6, and the UE 4 and the UE 6 may also send CSI reporting information to the UE 5.

The following describes in detail the signal receiving method and the signal sending method provided in the embodiments of this application.

FIG. 2 is a flowchart of a signal receiving method according to an embodiment of this application. As shown in FIG. 2, the method may include the following steps.

201: A network device sends scheduling information to a terminal device.

The scheduling information includes first indication information, the first indication information is used to indicate time domain positions of M time units, and M is an integer greater than 1. The scheduling information may be DCI, may be RRC signaling, may be a combination of DCI and RRC signaling, or may be other scheduling signaling. The time unit may be a subframe, a slot (slot), a mini-slot, a radio frame, an orthogonal frequency division multiplexing (Orthogonal Frequency Division Multiplexing, OFDM) symbol, a transmission time interval (Transmission Time Interval, TTI), or the like. It should be understood that the time unit is not limited to the several enumerated types, and may alternatively be another time length. Optionally, the signal receiving method in FIG. 2 may be applied to an unlicensed spectrum scenario, and the network device needs to perform LBT before sending the scheduling information. Optionally, in a multi-time unit scheduling scenario, the scheduling information sent by the network device needs to ensure that a time unit used for sending only CSI is located in a plurality of time units scheduled by using the scheduling information. Optionally, before sending the scheduling information to the terminal device, the network device performs LBT on a channel; and when the channel is in a spatial state, sends the scheduling information to the terminal device.

202: Receive a first signal in N time units in the M time units.

N is an integer greater than 0 and not greater than M. The first signal may include CSI and/or uplink data. The first signal may be a signal carrying information, or may be data. Preferably, M is greater than N. In other words, the network device receives the first signal only in the N time units in the M time units, and receives another signal in (M-N) time units in the M time units except the N time units. Optionally, the signal receiving method provided in this embodiment of this application is applied to an unlicensed spectrum scenario. That is, the network device receives the first signal on an unlicensed spectrum. The network device sends the scheduling information to the terminal device, and the scheduling information may indicate the terminal device to send the first signal in the N time units in the M time units. In other words, the scheduling information may schedule the M time units, and indicate the terminal device to send the first signal in the N time units, so that signaling can be effectively reduced.

In this embodiment of this application, the network device may receive at least two types of signals in one time of uplink transmission of the terminal device. This can effectively reduce a quantity of times of sending uplink transmission by the terminal device and a quantity of times of receiving data by the network device, so that communication efficiency is high.

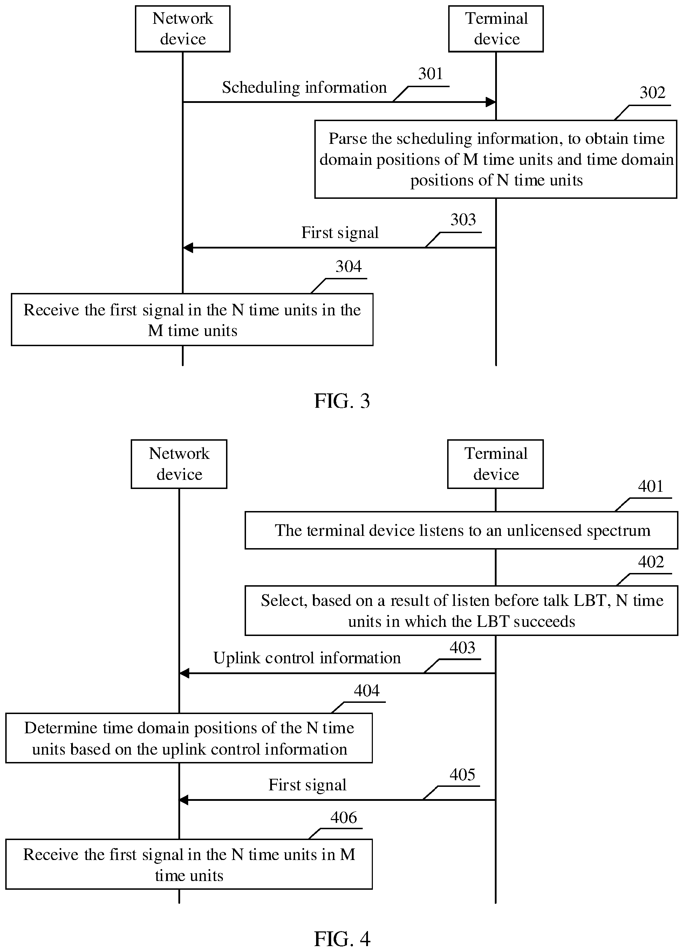

In FIG. 2, only operations performed by the network device are described. To describe the method provided in the embodiments of this application more clearly, the following describes an interaction procedure between the network device and the terminal device. FIG. 3 is a flowchart of an interaction method between a network device and a terminal device according to an embodiment of this application. As shown in FIG. 3, the method may include the following steps.

301: A network device sends scheduling information to a terminal device.

The scheduling information includes first indication information, the first indication information is used to indicate time domain positions of M time units, and M is an integer greater than 1.

302: The terminal device parses the scheduling information, to obtain the time domain positions of the M time units and time domain positions of N time units.

303: The terminal device sends a first signal in the N time units in the M time units.

In some embodiments, the terminal device sends a second signal in a time unit in the M time units except the N time units, and the second signal is different from the first signal. In these embodiments, by sending the scheduling information to the terminal device, the network device may indicate the terminal device to send at least two types of signals in one uplink transmission process. The scheduling information can accurately indicate time domain positions of specific time units in which the terminal device sends the first signal and time domain positions of specific time units in which the terminal device sends another signal (for example, the second signal). Optionally, the interaction method in FIG. 3 may be applied to an unlicensed spectrum scenario, and the terminal device needs to perform one or more times of LBT before sending the first signal. In the unlicensed spectrum scenario, a plurality of time units are scheduled by using one piece of scheduling information, so that signaling overheads and LBT overheads can be effectively reduced.

Optionally, in a multi-time unit scheduling scenario, if a time unit that is indicated by using the scheduling information and that is used for sending only CSI falls outside a plurality of time units scheduled by using the scheduling information, the terminal device sends the CSI in the first N time units or the last N time units in the M time units by default.

Optionally, before performing step 303, the terminal device may perform the following operations: listening to a target channel; and determining that the target channel is in a spatial state. Sending the first signal to the network device in the N time units in the M time units may be sending the first signal in the N time units through the target channel. A spectrum corresponding to the target channel may be an unlicensed spectrum. Optionally, the target channel belongs to a physical uplink shared channel. In this implementation, the terminal device may perform one time of LBT; and when detecting that the target channel is in the spatial state, perform uplink transmission in the plurality of time units through the target channel, so that LBT overheads can be effectively reduced.

304: The network device receives the first signal in the N time units in the M time units.

The first signal may include the CSI, or may include the CSI and uplink data. The network device may indicate the terminal device to perform CSI reporting in a multi-time unit scheduling mechanism, so that CSI reporting efficiency can be effectively improved.

In this embodiment of this application, the network device may receive at least two types of signals in one time of uplink transmission of the terminal device. This can effectively reduce a quantity of times of sending uplink transmission by the terminal device and a quantity of times of receiving data by the network device, so that communication efficiency is high.

The following describes several implementations in which the terminal device parses the scheduling information to obtain the time domain positions of the M time units and the time domain positions of the N time units.

### Manner 1

In the manner 1, the first signal includes the CSI and does not include the uplink data. The first indication information includes a first index, and time domain positions indicated by using the first index in a first configuration list are the time domain positions of the M time units. The first configuration list is configured by the network device for the terminal device, the first configuration list is preset by a system, or the first configuration list is stored in the terminal device. The terminal device may parse the first indication information to obtain the first index; and search the first configuration list for the time domain positions indicated by using the first index, to obtain the time domain positions of the M time units. For example, the scheduling information is DCI, the first indication information may be time domain resource indication information (namely, a TDRA field) in the DCI, and the first index may be a codepoint/value corresponding to the time domain resource indication information. The first configuration list may be a PUSCH time domain resource configuration information list (which is also referred to as a PUSCH time domain resource allocation list) preset by the network device or redefined in RRC signaling. Time information of the M time units is configured in detail in the first configuration list, and includes one or more of a mapping manner, start time S, a time offset K₂, duration L, or the like. Table 1 is an example of the first configuration list. Table 1 shows detailed configuration information of each time unit when there are two time units. It may be understood that Table 1 is merely used as an example for description. During actual configuration, the first configuration list may be in another form. For example, common information between different time units is combined or jointly indicated. This is not limited in this application. Optionally, one codepoint/value (namely, the first index) corresponding to the first indication information corresponds to one configuration in Table 1. In this way, the terminal device may determine the time domain positions of the M time units based on the first indication information and the first configuration list. Assuming that the network device sends the scheduling information to the terminal device in a slot 1, and the codepoint corresponding to the first indication information is equal to 0, the terminal device needs to search the first configuration list for the first row of configuration information, to obtain the time domain positions of the M time units. For example, two consecutive time units scheduled by a base station are obtained, and a time offset K₂ of the first time unit, relative to the DCI, in the two time units is two slots. That is, the two time units are located in a slot 3 and a slot 4. It should be understood that the time unit is not limited to a slot, and may alternatively be a subframe, a radio frame, an OFDM symbol, a mini-slot, a TTI, or the like.

Optionally, the first indication information is used to indicate time offsets of the time domain positions, of the M time units, separately relative to a slot in which the scheduling information is received. For example, the first indication information is used to indicate that offsets of four time units, separately relative to a slot 1 in which the terminal device receives the scheduling information, are three slots, four slots, five slots, and six slots, and in this case, the two time units are a slot 4, a slot 5, a slot 6, and a slot 7.

**Table 1 First configuration list**

| Row index | PUSCH mapping type | K₂ | *S* | *L* | PUSCH mapping type | K₂ | *S* | *L* |
|---|---|---|---|---|---|---|---|---|
| | Time unit 1 | | | | Time unit 2 | | | |
| 1 | Type A | *j* | 0 | 14 | Type A | *j* | 0 | 14 |
| 2 | Type A | *j* | 0 | 12 | Type A | *j* | 0 | 12 |
| 3 | Type A | *j* | 0 | 10 | Type A | *j* | 0 | 10 |
| 4 | Type B | *j* | 2 | 10 | Type B | *j* | 2 | 10 |
| 5 | Type B | *j* | 4 | 10 | Type B | *j* | 4 | 10 |
| 6 | Type B | *j* | 4 | 8 | Type B | *j* | 4 | 8 |
| 7 | Type B | *j* | 4 | 6 | Type B | *j* | 4 | 6 |
| 8 | Type A | *j*+1 | 0 | 14 | Type A | *j*+1 | 0 | 14 |
| 9 | Type A | *j*+1 | 0 | 12 | Type A | *j*+1 | 0 | 12 |
| 10 | Type A | *j*+1 | 0 | 10 | Type A | *j*+1 | 0 | 10 |
| 11 | Type A | *j*+2 | 0 | 14 | Type A | *j*+2 | 0 | 14 |
| 12 | Type A | *j*+2 | 0 | 12 | Type A | *j*+2 | 0 | 12 |
| 13 | Type A | *j*+2 | 0 | 10 | Type A | *j*+2 | 0 | 10 |
| 14 | Type B | *j* | 8 | 6 | Type B | *j* | 8 | 6 |
| 15 | Type A | *j*+3 | 0 | 14 | Type A | *j*+3 | 0 | 14 |
| 16 | Type A | *j*+3 | 0 | 10 | Type A | *j*+3 | 0 | 10 |

The scheduling information further includes second indication information, and the second indication information is used to indicate the time domain positions of the N time units. The second indication information may include a second index, and time domain positions indicated by using the second index in a second configuration list are the time domain positions of the N time units. The second configuration list is configured by the network device for the terminal device, the second configuration list is preset by a system, or the second configuration list is stored in the terminal device. The terminal device may parse the second indication information, to obtain the second index, and search the second configuration list for the time domain positions indicated by using the second index, to obtain the time domain positions of the N time units. Optionally, the second indication information is implicit in the first indication information, and the second index is the first index. The terminal device may search, based on the first index or the second index, a time offset list (which corresponds to the foregoing second configuration list) indicated in CSI reporting configuration information for a time domain position of a time unit used for sending the CSI, to obtain the time domain positions of the N time units. The terminal device may obtain a plurality of pieces of CSI reporting configuration information or a plurality of sets of pieces of CSI reporting configuration information (namely, CSI-ReportConfig information) based on the scheduling information, to further obtain a plurality of corresponding time offset lists or a plurality of sets of corresponding time offset lists, for example, reportSlotOffsetLists. An implementation in which the terminal device obtains the plurality of pieces of CSI reporting configuration information or the plurality of sets of pieces of CSI reporting configuration information based on the scheduling information is subsequently described. For each reportSlotOffsetList or each set of reportSlotOffsetLists, the terminal device searches each reportSlotOffsetList or each set of reportSlotOffsetLists (which corresponds to the second configuration list) for configuration information indicated by using the first index or the second index, to obtain one or more time offset values (namely, offset information). Then, a largest one is selected from the one or more pieces of offset information, to obtain a time offset value, of each time unit used for sending the CSI, relative to the scheduling information. Assuming that a codepoint corresponding to the first index is equal to 0, the terminal device searches each reportSlotOffsetList or each set of reportSlotOffsetLists for the first row of configuration information. Assuming that a codepoint corresponding to the second index is equal to 3, the terminal device searches each reportSlotOffsetList or each set of reportSlotOffsetLists for the fourth row of configuration information. For example, for the first reportSlotOffsetList or the first set of reportSlotOffsetLists, offset information obtained by the terminal device based on the first index or the second index is 3; and for the second piece of CSI-ReportConfig information or the second set of pieces of CSI-ReportConfig information, offset information obtained based on the first index or the second index is 4. It indicates that offsets of time units, separately relative to a slot 1 in which the scheduling information is received, are three slots and four slots, and the time units are used for sending the CSI. That is, the time units are a slot 4 and a slot 5. In some embodiments, the first configuration list may include the second configuration list, and the terminal device may find the time domain positions of the M time units and the time domain positions of the N time units by using the first indication information and the first configuration list.

When the scheduling information indicates that only the CSI can be sent in the time unit used for sending the CSI, the terminal device may determine the time domain positions of the M time units and the time domain positions of the N time units by using a combination of the indication information and the configuration list.

### Manner 2

In the manner 2, the first signal includes the CSI and the uplink data, or includes only the uplink data. An implementation in which the terminal device obtains the time domain positions of the M time units in the manner 2 may be the same as the implementation in which the terminal device obtains the time domain positions of the M time units in the manner 1. Details are not described herein again. In the manner 2, the terminal device may determine, based on the time domain positions of the M time units, the time domain positions of the N time units used for sending the first signal.

Optionally, second indication information indicates that a quantity of time units used for sending the first signal is N. For example, the second indication information includes quantity information N, indicating that the quantity of time units used for sending the first signal is N. The terminal device may determine, according to a preset rule, specific N time units, in the M time units, that are used for sending the first signal. For example, the terminal device determines the first N time units or the last N time units, in the M time units, that are used for sending the first signal. Because the terminal device already knows the time domain positions of the M time units, the terminal device may determine the time domain positions of the N time units.

Optionally, the second indication information indicates the positions, of the N time units, relative to the positions of the M time units. In this way, after obtaining the time domain positions of the M time units, the terminal device may determine the time domain positions of the N time units based on the second indication information. Optionally, the second indication information includes one or more time offset values, and the time offset values may indicate positions, of the N time units, relative to the positions of the M time units. For example, if N is 4, and time offset values included in the second indication information are 1, 3, 5, and 6 in sequence, the second indication information indicates that the first, third, fifth, and sixth time units in the M time units are time units included in the N time units. Optionally, the second indication information includes a bitmap (bitmap), the bitmap includes M bits, each bit corresponds to one of the M time units, and each bit indicates whether to send the first signal in the time unit corresponding to the bit. Assuming that M is 4, "1001" indicates that the first signal is sent in the first time unit and the fourth time unit. That is, the N time units include the first time unit and the fourth time unit.

Optionally, the second indication information may include a third index, and time domain positions indicated by using the third index in a third configuration list are the time domain positions of the N time units. The third configuration list is configured by the network device for the terminal device, the third configuration list is preset by a system, or the third configuration list is stored in the terminal device. The terminal device may parse the second indication information, to obtain the third index, and search the third configuration list for the time domain positions indicated by using the third index, to obtain the time domain positions of the N time units. The third configuration list may be a configuration list similar to the foregoing first configuration list. A difference lies in that in the first configuration list, each row is configuration information of the M time units; and in the third configuration list, each row is configuration information of the N time units. For example, the third index is 3, and the terminal device searches the third configuration list for a value of K₂ when a row index is equal to 4, to obtain time offset information of the N time units. If the terminal device receives the scheduling information in a slot n, the terminal device needs to send the CSI in a slot n+K₂.

Optionally, the terminal device determines the time domain positions of the N time units based on the first configuration list and the second indication information. The first configuration list may include not only the time domain positions of the M time units indicated by using the scheduling information, but also the time domain positions of the N time units used for sending the first signal. The terminal device may query the time domain positions indicated, in the first configuration list, by using the index included in the second indication information, to obtain the time domain positions of the N time units.

Optionally, the second indication information is used to indicate time offsets of the time domain positions, of the N time units, separately relative to a slot in which the scheduling information is received. For example, the second indication information is used to indicate that offsets of two time units, separately relative to a slot 1 in which the terminal device receives the scheduling information, are three slots and four slots, and in this case, the two time units are a slot 4 and a slot 5.

When the scheduling information indicates that the first signal that needs to be sent is the CSI and the uplink data or is the uplink data, the terminal device may first determine the time domain positions of the M time units by using a combination of the first indication information and the configuration list, and then determine the time domain positions of the N time units based on the time domain positions of the M time units.

The first signal in the foregoing embodiment may include the CSI and the uplink data, or may include only the CSI. In some embodiments, the scheduling information further includes third indication information, and the third indication information is used to indicate, in the N time units, a time unit used for sending only the CSI and/or a time unit used for sending the CSI and the uplink data. Optionally, the third indication information is a bitmap including N bits, and each bit corresponds to one time unit. The terminal device may determine, based on the third indication information, specific time units in which only the CSI is sent and specific time units in which both the CSI and the uplink data are sent. Assuming that the terminal device may send the CSI in two time units, "10" indicates that only the CSI (that is, CSI only) is sent in the first time unit of the two time units, and the CSI and the data are sent in the other time unit. Optionally, the third indication information includes one bit. If the bit is 1, it indicates that only the CSI is sent in the N time units. If the bit is 0, it indicates that both the CSI and the uplink data are sent in the N time units. In some application scenarios, sending the CSI may not need to occupy one time unit. In this case, the terminal device may send both the CSI and the uplink data in a same time unit, to improve resource utilization. During actual application, the network device may indicate, based on an actual requirement, the terminal device to transmit only the CSI in some time units, and transmit both the CSI and the data in other time units, so that time-frequency resources can be more fully utilized.

In some embodiments, the scheduling information further includes fourth indication information, and the fourth indication information is used to indicate N pieces of CSI reporting configuration information. The fourth indication information may correspond to N codepoints (codepoints)/values, each codepoint/value indicates one piece of CSI reporting configuration information or one set of pieces of CSI reporting configuration information, and the N codepoints/values indicate N pieces of CSI reporting configuration information or N sets of pieces of CSI reporting configuration information. The fourth indication information may use a CSI request field defined in 3GPP 38.212. For example, the fourth indication information includes N subfields, and each subfield corresponds to one codepoint/value. For example, the fourth indication information may be configured in RRC signaling, and then may be indicated by using a combination of a field (namely, the fourth indication information) in the scheduling information and the RRC signaling. That is, the codepoint/value corresponding to the fourth indication information is associated with the CSI reporting configuration information defined in the RRC. The network device may configure the CSI reporting configuration information of the terminal device by using the RRC signaling. The terminal device may determine one piece of CSI reporting configuration information or one set of pieces of CSI reporting configuration information by using one codepoint/value corresponding to the fourth indication information. For example, the terminal device is configured with a plurality of pieces of CSI reporting configuration information or a plurality of sets of pieces of CSI reporting configuration information, each piece of CSI reporting configuration information or each set of pieces of CSI reporting configuration information is associated with one codepoint/value, and the terminal device may determine one piece of CSI reporting configuration information or one set of pieces of CSI reporting configuration information based on each codepoint/value corresponding to the fourth indication information, to perform a CSI feedback. Optionally, a system of the terminal device has a preset list of CSI reporting configuration information, and the fourth indication information may be indicated by using an index of the CSI reporting configuration information. The fourth indication information includes one or more pieces of index information, and the terminal device may learn, based on the one or more pieces of index information, of configuration information required for performing CSI reporting. Optionally, the scheduling information is one piece of DCI. One piece of CSI reporting configuration information may include a combination of one or more of the following information: a CSI reporting type, CSI reporting time information (which may be one or more combinations of a periodicity, a time offset relative to specific time, absolute time, or the like), CSI resource information (which may be resource information used to perform CSI measurement, for example, resource information of a CSI-RS, resource information that corresponds to an SSB and that is used to perform CSI measurement, and/or resource information used to perform interference measurement), or the like. The terminal device may send the CSI in the N time units based on the N pieces of CSI reporting configuration information or the N sets of pieces of CSI reporting configuration information indicated by using the fourth indication information. During actual application, the terminal device may send corresponding CSI in one time unit based on one piece of CSI reporting configuration information or one set of pieces of CSI reporting configuration information. In other words, the CSI sent in different time units may be different.

In some embodiments, the scheduling information further includes fifth indication information, and the fifth indication information is used to indicate the terminal device to perform CSI reporting. For example, the fifth indication information may use a CSI request field defined in 3GPP 38.212. Optionally, the fifth indication information may alternatively use a 1-bit (bit) field to indicate whether the terminal device needs to perform CSI reporting. For example, a bit "0" is used to indicate that the terminal device does not need to perform CSI reporting, and a bit "1" is used to indicate that the terminal device needs to perform CSI reporting. Alternatively, there may be another indication manner. This is not limited in the present invention. Optionally, the fifth indication information is implicit in the fourth indication information. In other words, the terminal device may determine, based on the fourth indication information, that CSI reporting needs to be performed.

In the foregoing embodiment, a solution in which the network device sends the scheduling information to the terminal device, and the terminal device sends the CSI in the N time units, in the M time units, indicated by the scheduling information is described. The embodiment of this application further provides a solution in which the network device does not need to send the scheduling information, and the terminal device may send the first signal in a plurality of time units in the M time units. FIG. 4 is a flowchart of another interaction method between a network device and a terminal device according to an embodiment of this application. As shown in FIG. 4, the method may include the following steps.

401: A terminal device listens to an unlicensed spectrum.

402: The terminal device selects, based on a result of listen before talk LBT, N time units in which the LBT succeeds.

N is an integer greater than 1. The terminal device may determine a busy/idle state of the unlicensed spectrum based on a receive power of the unlicensed spectrum. If the receive power is less than a specific threshold, it is considered that the unlicensed spectrum is in an idle state, and the terminal device may send a signal on the unlicensed spectrum; otherwise, the terminal device does not send a signal. Optionally, the terminal device performs uplink transmission in M time units, sends a first signal in the N time units, and sends a second signal in (M-N) time units, and the second signal is different from the first signal. The first signal may include CSI and uplink data, or may include only the CSI.

403: The terminal device sends uplink control information to a network device.

The uplink control information includes indication information of time domain positions of the N time units. Optionally, the uplink control information further includes indication information of time domain positions of the M time units.

404: The network device determines the time domain positions of the N time units based on the uplink control information.

The uplink control information may include a target index. The network device may search a fourth configuration list for time domain positions indicated by using the target index, to obtain the time domain positions of the N time units. The fourth configuration list is preset by a system, or the fourth configuration list is stored in the network device. The fourth configuration list is similar to the foregoing first configuration list. Details are not described herein again.

405: The terminal device sends the first signal in the N time units.

406: The network device receives the first signal in the N time units in the M time units.

Optionally, the network device receives the second signal in the (M-N) time units.

In this embodiment of this application, the terminal device may send the first signal to the network device in a plurality of time units based on the result of the LBT, and may send the first signal in the plurality of time units only by performing one time of the LBT. This can reduce signaling, reduce LBT overheads, and reduce a channel loss probability.

An example in which the terminal device sends the first signal in one of the M time units is described below with reference to the accompanying drawings.

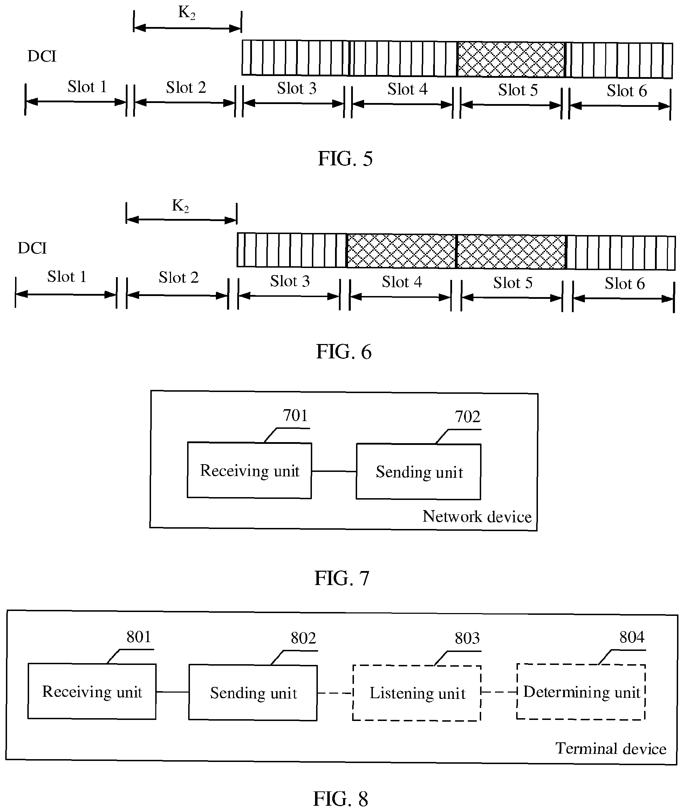

FIG. 5 is a schematic diagram of a signal sending process according to an embodiment of this application. As shown in FIG. 5, a terminal device receives scheduling information (namely, DCI in FIG. 5) in a slot 1, and a time offset K₂ of the first time unit, relative to the DCI, in four time units in which the terminal device sends data is two slots. That is, the four time units are located in a slot 3, a slot 4, a slot 5, and a slot 6. The terminal device sends a first signal in the slot 5. Several examples consistent with the signal sending process in FIG. 5 are described below.

### Example 1

It is assumed that a base station sends DCI (namely, scheduling information) in a slot 1, a codepoint corresponding to an indication field TDRA (namely, first indication information) is equal to 0, a codepoint corresponding to a CSI request (namely, fourth indication information) is equal to 0, and a codepoint corresponding to third indication information is equal to 1. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the plurality of time units are located in a slot 3, a slot 4, a slot 5, and a slot 6. The third indication information indicates that only CSI is sent in a time unit used for sending the CSI, that is, CSI only. The UE needs to obtain one or more pieces of corresponding CSI-ReportConfig information based on the codepoint corresponding to the CSI request, to further obtain one or more corresponding reportSlotOffsetLists, search the one or more reportSlotOffsetLists for the first row of configuration information based on the TDRA, to obtain one or more pieces of offset information, and then select a largest one from the one or more pieces of offset information. For example, if the largest offset information is 4, it indicates that an offset of a time unit, relative to the slot 1 of the DCI, is four slots, and the time unit is used for sending the CSI. That is, the time unit is the slot 5. In the example 1, the first signal includes only the CSI.

### Example 2

It is assumed that a base station sends DCI (namely, scheduling information) in a slot 1, a codepoint corresponding to an indication field TDRA (namely, first indication information) is equal to 0, second indication information is "0010", a codepoint corresponding to a CSI request (namely, fourth indication information) is equal to 0, and a codepoint corresponding to third indication information is equal to 0. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the plurality of time units are located in a slot 3, a slot 4, a slot 5, and a slot 6. The third indication information indicates that CSI and uplink data are sent together in a time unit used for sending the CSI. The four bits included in the second indication information are in a one-to-one correspondence with the four time units. The time unit corresponding to the bit 1 is used for sending the CSI and the uplink data. The UE may determine, based on the second indication information, to send the CSI and the data in the third time unit (namely, the slot 5) in the four time units. Optionally, a codepoint corresponding to the second indication information is equal to 3, and the second indication information indicates that the CSI and the uplink data are sent in the third time unit in the four time units. The UE may determine, based on the second indication information, to send the CSI and the uplink data in the third time unit (namely, the slot 5) in the four time units. In the example 2, the first signal includes the CSI and the uplink data.

### Example 3

It is assumed that a base station sends DCI (namely, scheduling information) in a slot 1, a codepoint corresponding to an indication field TDRA (namely, first indication information) is equal to 0, a codepoint corresponding to second indication information is equal to 2, a codepoint corresponding to a CSI request (namely, fourth indication information) is equal to 0, and a codepoint corresponding to third indication information is equal to 0. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the plurality of time units are located in a slot 3, a slot 4, a slot 5, and a slot 6. The third indication information indicates that CSI and uplink data are sent together in a time unit used for sending the CSI. The UE needs to search another PUSCH time domain resource configuration information list (which corresponds to the foregoing third configuration list) for the third row of configuration information, to obtain a time domain position of a time unit, namely, the slot 5. In the example 3, the first signal includes the CSI and the uplink data.

### Example 4

It is assumed that a base station sends DCI (namely, scheduling information) in a slot 1, a codepoint corresponding to an indication field TDRA (namely, first indication information) is equal to 0, a codepoint corresponding to a CSI request (namely, fourth indication information) is equal to 0, and a codepoint corresponding to third indication information is equal to 0. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the M time units are located in a slot 3, a slot 4, a slot 5, and a slot 6. The third indication information indicates that CSI and uplink data are sent together in a time unit used for sending the CSI. The UE sends the CSI and the uplink data in the last but one time unit in the M time units according to a preset rule. In the example 4, the first signal includes the CSI and the uplink data.

It should be understood that the foregoing examples are merely some rather than all examples.

An example in which the terminal device sends the first signal in a plurality of time units in the M time units is described below with reference to the accompanying drawings.

FIG. 6 is a schematic diagram of another signal sending process according to an embodiment of this application. As shown in FIG. 6, a terminal device receives scheduling information (namely, DCI in FIG. 6) in a slot 1, and a time offset K₂ of the first time unit, relative to the DCI, in four time units in which the terminal device sends data is two slots. That is, the four time units are located in a slot 3, a slot 4, a slot 5, and a slot 6. The terminal device sends a first signal in the slot 4 and the slot 5. Several examples consistent with the signal sending process in FIG. 6 are described below.

### Example 5

It is assumed that a base station sends DCI (namely, scheduling information) in a slot 1, a codepoint corresponding to an indication field TDRA (namely, first indication information) is equal to 0, codepoints corresponding to a CSI request (namely, fourth indication information) are equal to 0 and 1, and third indication information indicates "11", that is, only CSI is sent in two time units used for CSI reporting. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the M time units are located in a slot 3, a slot 4, a slot 5, and a slot 6. The UE needs to obtain two pieces of corresponding CSI-ReportConfig information or two sets of pieces of corresponding CSI-ReportConfig information based on the two codepoints corresponding to the CSI request, to further obtain two or two sets of corresponding reportSlotOffsetLists; and for each reportSlotOffsetList or each set of reportSlotOffsetLists, search the first row of configuration information in each reportSlotOffsetList or each set of reportSlotOffsetLists based on the TDRA, to obtain one or more pieces of offset information, and then select a largest one from the one or more pieces of offset information. For example, for the first piece of CSI-ReportConfig information or the first set of pieces of CSI-ReportConfig information, offset information obtained based on the TDRA is 3; and for the second piece of CSI-ReportConfig information or the second set of pieces of CSI-ReportConfig information, offset information obtained based on the TDRA is 4. It indicates that offsets of time units, separately relative to the slot 1 in which the DCI is received, are three slots and four slots, and the time units are used for sending the CSI. That is, the time units are the slot 4 and the slot 5. In the example 5, the first signal includes only the CSI.

### Example 6

It is assumed that a base station sends DCI (namely, scheduling information) in a slot 1, a codepoint corresponding to an indication field TDRA (namely, first indication information) is equal to 0, second indication information is "0110", a codepoint corresponding to a CSI request (namely, fourth indication information) is equal to 0, and third indication information is "00". In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the plurality of time units are located in a slot 3, a slot 4, a slot 5, and a slot 6. The third indication information indicates that CSI and uplink data are sent together in two time units used for sending the CSI. The four bits included in the second indication information are in a one-to-one correspondence with the four time units. The time unit corresponding to the bit 1 is used for sending the CSI and the uplink data. The UE may send the CSI and the uplink data in the second time unit (namely, the slot 4) and the third time unit (namely, the slot 5) in the four time units based on the second indication information. Optionally, codepoints corresponding to the second indication information are equal to 2 and 3, and the second indication information indicates that the CSI and the uplink data are sent in the second time unit and the third time unit in the four time units. In the example 6, the first signal includes the CSI and the uplink data.

### Example 7

It is assumed that a base station sends DCI (namely, scheduling information) in a slot 1, a codepoint corresponding to an indication field TDRA (namely, first indication information) is equal to 0, a codepoint corresponding to second indication information is equal to 2, a codepoint corresponding to a CSI request (namely, fourth indication information) is equal to 0, and a codepoint corresponding to third indication information is equal to 0. In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset K₂ of the first time unit, relative to the DCI, in the four time units is two slots. That is, the plurality of time units are located in a slot 3, a slot 4, a slot 5, and a slot 6. The third indication information indicates that CSI and uplink data are sent together in a time unit used for sending the CSI. The UE needs to search another PUSCH time domain resource configuration information list (which corresponds to the foregoing third configuration list) for the third row of configuration information, to obtain time domain positions of two time units, namely, the slot 4 and the slot 5. In the example 7, the first signal includes the CSI and the uplink data.

### Example 8

It is assumed that a base station sends DCI (namely, scheduling information) in a slot 1, a codepoint corresponding to an indication field TDRA (namely, first indication information) is equal to 0, a codepoint corresponding to second indication information is equal to 2, codepoints corresponding to a CSI request (namely, fourth indication information) are equal to 0 and 1, and third indication information is "00". In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset of the first time unit, relative to the DCI, in the four time units is two slots. That is, the M time units are located in a slot 3, a slot 4, a slot 5, and a slot 6. The third indication information is "00", indicating that CSI and uplink data are sent in two time units. The second indication information indicates that a quantity of time units used for sending the CSI and the uplink data is 2. The UE may send the CSI and the uplink data in the last but one time unit to the last but N time unit in the four time units according to a preset rule. N is 2. In other words, the UE may send the CSI and the uplink data in N default time units in the M time units. The preset rule may be configured by the base station for the UE by using RRC signaling. In the example 8, the first signal includes the CSI and the uplink data.

### Example 9

It is assumed that a base station sends DCI (namely, scheduling information) in a slot 1, a codepoint corresponding to an indication field TDRA (namely, first indication information) is equal to 0, second indication information is "0010", codepoints corresponding to a CSI request (namely, fourth indication information) are equal to 0 and 1, and third indication information is "01". In this case, UE needs to search a PUSCH time domain resource configuration information list (which corresponds to the foregoing first configuration list) for the first row of configuration information, to obtain time domain positions of a plurality of time units. For example, four consecutive time units scheduled by the base station are obtained, and a time offset of the first time unit, relative to the DCI, in the four time units is two slots. That is, the M time units are located in a slot 3, a slot 4, a slot 5, and a slot 6. The third indication information is "01", indicating that only CSI is sent in one time unit, and CSI and uplink data are sent in another time unit. The codepoints corresponding to the CSI request may be in a one-to-one correspondence with codepoints (that is, "01") corresponding to the third indication information, and the UE may obtain CSI-ReportConfig information in the codepoints corresponding to the CSI request, where the CSI-ReportConfig information is corresponding information when the codepoint corresponding to the third indication information is 0. Assuming that the codepoints corresponding to the CSI request are equal to 0, 1, 2, and 3, and the third indication information is "1001", the UE obtains CSI-ReportConfig information, where the CSI-ReportConfig information is corresponding information when the codepoints are equal to 1 and 2. The UE needs to obtain one piece of CSI-ReportConfig information or one set of pieces of CSI-ReportConfig information based on the codepoint, equal to 1, corresponding to the CSI request, to further obtain one corresponding reportSlotOffsetList or one set of corresponding reportSlotOffsetLists, search the reportSlotOffsetList for the first row of configuration information based on the TDRA, to obtain one or more pieces of offset information, and then select a largest one from the one or more pieces of offset information. For example, for one piece of CSI-ReportConfig information or one set of pieces of CSI-ReportConfig information, offset information obtained by the UE based on the TDRA is 3. It indicates that an offset of a time unit, relative to a slot 1 in which the DCI is received, is three slots, and the time unit is only used for sending the CSI. That is, the time unit is the slot 4.

The four bits included in the second indication information are in a one-to-one correspondence with the four time units. The time unit corresponding to the bit 1 is used for sending the CSI and the uplink data. The UE may send the CSI and the uplink data in the third time unit (namely, the slot 5) in the four time units based on the second indication information. Optionally, a codepoint corresponding to the second indication information is equal to 3, and the second indication information indicates that the CSI and the uplink data are sent in the third time unit in the four time units. In the example 9, a part of the first signals include the CSI and the uplink data, and the other part of the first signals include only the CSI.

FIG. 7 is a schematic diagram of a structure of a network device according to an embodiment of this application. As shown in FIG. 7, the network device includes:
a sending unit 701, configured to send scheduling information, where the scheduling information includes first indication information, the first indication information is used to indicate time domain positions of M time units, and M is an integer greater than 1; and
a receiving unit 702, configured to receive a first signal in N time units in the M time units, where N is an integer greater than 0 and not greater than M.

In an optional implementation, the first signal includes channel state information CSI and/or uplink data.

In an optional implementation, the first indication information includes a first index, and time domain positions indicated by using the first index in a first configuration list are the time domain positions of the M time units. The first configuration list is configured by the network device for a terminal device, the first configuration list is preset by a system, or the first configuration list is stored in the terminal device.

In an optional implementation, the scheduling information further includes second indication information, and the second indication information is used to indicate time domain positions of the N time units.

In an optional implementation, the second indication information includes a second index, and time domain positions indicated by using the second index in a second configuration list are the time domain positions of the N time units. The second configuration list is configured by the network device for the terminal device, the second configuration list is preset by a system, or the second configuration list is stored in the terminal device.

In an optional implementation, the second indication information indicates that a quantity of time units used for feeding back the first signal is N. Optionally, the second indication information includes quantity information N, used to indicate that the quantity of time units for sending the first signal is N.

In an optional implementation, the second indication information indicates the positions, of the N time units, relative to the positions of the M time units.

In an optional implementation, the scheduling information further includes third indication information, and the third indication information is used to indicate, in the N time units, a time unit used for sending only the CSI and/or a time unit used for sending the CSI and the uplink data.

In an optional implementation, the scheduling information further includes fourth indication information, and the fourth indication information is used to indicate N pieces of CSI reporting configuration information.

In an optional implementation, the scheduling information further includes fifth indication information, and the fifth indication information is used to indicate the terminal device to perform CSI reporting.

FIG. 8 is a schematic diagram of a structure of a terminal device according to an embodiment of this application. As shown in FIG. 8, the terminal device includes:
a receiving unit 801, configured to receive scheduling information from a network device, where the scheduling information includes first indication information, the first indication information is used to indicate time domain positions of M time units, and M is an integer greater than 1; and
a sending unit 802, configured to send a first signal to the network device in N time units in the M time units, where N is an integer greater than 0 and not greater than M.

In an optional implementation, the first signal includes channel state information CSI and/or uplink data.

In an optional implementation, the terminal device further includes:
a listening unit 803, configured to listen to a target channel; and
a determining unit 804, configured to determine that the target channel is in a spatial state, where
the sending unit 802 is specifically configured to send the first signal in the N time units through the target channel.

In an optional implementation, the first indication information includes a first index, and time domain positions indicated by using the first index in a first configuration list are the time domain positions of the M time units. The first configuration list is configured by the network device for the terminal device, the first configuration list is preset by a system, or the first configuration list is stored in the terminal device.

In an optional implementation, the scheduling information further includes second indication information, and the second indication information is used to indicate time domain positions of the N time units.

In an optional implementation, the second indication information includes a second index, and time domain positions indicated by using the second index in a second configuration list are the time domain positions of the N time units. The second configuration list is configured by the network device for the terminal device, the second configuration list is preset by a system, or the second configuration list is stored in the terminal device.

In an optional implementation, the second indication information indicates that a quantity of time units used for feeding back the first signal is N. Optionally, the second indication information includes quantity information N, used to indicate that the quantity of time units for sending the first signal is N.

In an optional implementation, the second indication information indicates the positions, of the N time units, relative to the positions of the M time units.

In an optional implementation, the first signal includes the CSI and does not include the uplink data; and
the determining unit 804 is further configured to: determine the time domain positions of the M time units based on a first configuration list and/or the first indication information; and determine the time domain positions of the N time units based on a second configuration list and/or the second indication information, where the first configuration list is configured by the network device for the terminal device, the first configuration list is preset by a system, or the first configuration list is stored in the terminal device; and the second configuration list is configured by the network device for the terminal device, the second configuration list is preset by a system, or the second configuration list is stored in the terminal device.

In an optional implementation, a third configuration list is configured for the terminal device, and the first signal includes the uplink data; and
the determining unit 804 is further configured to: determine the time domain positions of the M time units based on a first configuration list and/or the first indication information; and determine the time domain positions of the N time units based on the time domain positions of the M time units and/or the second indication information, where the first configuration list is configured by the network device for the terminal device, the first configuration list is preset by a system, or the first configuration list is stored in the terminal device.

In an optional implementation, the first signal includes the uplink data; and
the determining unit 804 is further configured to: determine the time domain positions of the M time units based on a first configuration list and/or the first indication information; and determine the time domain positions of the N time units based on the first configuration list and/or the second indication information, where the first configuration list is configured by the network device for the terminal device, the first configuration list is preset by a system, or the first configuration list is stored in the terminal device.

In an optional implementation, the scheduling information further includes third indication information, and the third indication information is used to indicate, in the N time units, a time unit used for sending only the CSI and/or a time unit used for sending the CSI and the uplink data; and
the sending unit 802 is specifically configured to send the first signal to the network device in the N time units based on the third indication information.

It may be understood that the N time units all may be used for sending only the CSI, or all may be used for sending both the CSI and the uplink data. Alternatively, a part of the N time units are used for sending the CSI, and the other part of the N time units are used for sending the CSI and the uplink data. The sending unit 802 may determine, in the N time units based on the third indication information, specific time units in which only the CSI is sent, and specific time units in which only the CSI and the uplink data are sent, to further send the first signal based on a requirement of the network device.

In an optional implementation, the scheduling information further includes fourth indication information, and the fourth indication information is used to indicate N pieces of CSI reporting configuration information.

In an optional implementation, the scheduling information further includes fifth indication information, and the fifth indication information is used to indicate the terminal device to perform CSI reporting.

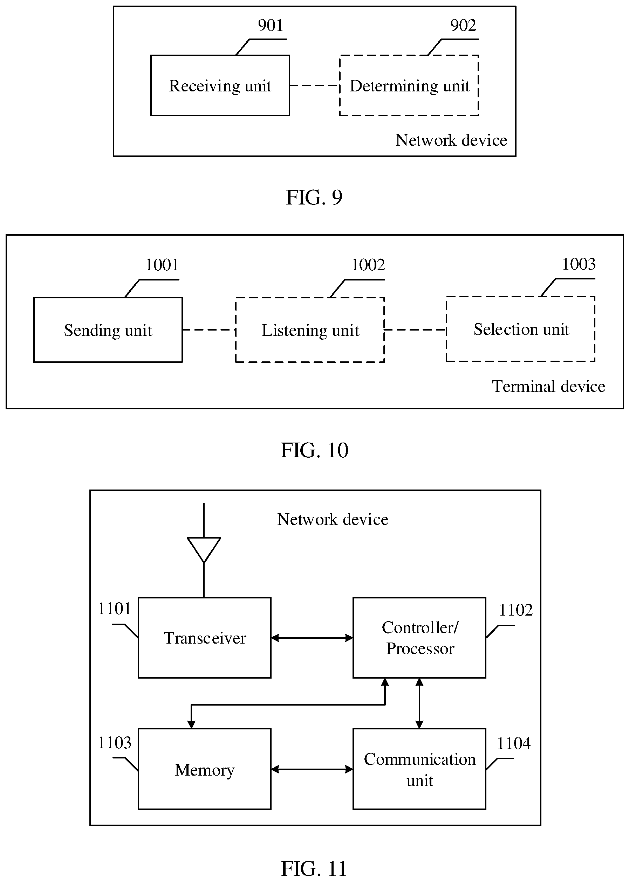

FIG. 9 is a schematic diagram of a structure of a network device according to an embodiment of this application. As shown in FIG. 9, the network device includes:
a receiving unit 901, configured to receive a first signal in N time units in M time units, where M is an integer greater than 1, and N is an integer greater than 1 and not greater than M.

In an optional implementation, the first signal includes channel state information CSI and/or uplink data.

In an optional implementation, the receiving unit 901 is further configured to receive uplink control information from a terminal device, where the uplink control information includes indication information of time domain positions of the N time units; and the network device further includes: a determining unit 902, configured to determine the time domain positions of the N time units based on the uplink control information.

In an optional implementation, the indication information includes a target index; and the determining unit 902 is specifically configured to determine the time domain positions of the N time units based on a fourth configuration list and the target index.

FIG. 10 is a schematic diagram of a structure of a terminal device according to an embodiment of this application. As shown in FIG. 10, the terminal device includes:
a sending unit 1001, configured to send a first signal to a network device in N time units in M time units, where M is an integer greater than 1, and N is an integer greater than 1 and not greater than M.

In an optional implementation, the first signal includes channel state information CSI and/or uplink data.

In an optional implementation, the terminal device further includes: a listening unit 1002, configured to listen to an unlicensed spectrum; and
a selection unit 1003, further configured to select, based on a result of listen before talk LBT, the N time units in which the LBT succeeds.

It should be understood that division of units in the network device and the terminal device is merely logical function division. During actual implementation, all or some units may be integrated into one physical entity, or may be physically separated. For example, each of the foregoing units may be a separate processing element, or may be integrated on a chip of a terminal, or may be stored in a storage element of a controller in a form of program code. A processing element of the processor invokes and executes a function of each of the foregoing units. In addition, the units may be integrated or may be implemented separately. The processing element may be an integrated circuit chip, and has a signal processing capability. In an implementation process, steps of the foregoing methods or the foregoing units may be implemented by using an integrated logic circuit of hardware in the processing element, or by using instructions in a form of software. The processing element may be a general-purpose processor, for example, a network processor or a central processing unit (English: central processing unit, CPU for short), or may be one or more integrated circuits configured to implement the foregoing methods, for example, one or more application-specific integrated circuits (English: application-specific integrated circuits, ASICs for short), or one or more microprocessors (English: digital signal processors, DSPs for short), or one or more field-programmable gate arrays (English: field-programmable gate arrays, FPGAs for short).

FIG. 11 is a possible schematic diagram of a structure of a network device, in particular a base station, in the foregoing embodiments. The shown network device in includes a transceiver 1101 and a controller/processor 1102. The transceiver 1101 may be configured to support information sending and receiving between the network device and the terminal device (for example, the UE) in the foregoing embodiments, and support radio communication between the network device and another network device. The controller/processor 1102 may be configured to control a function of the transceiver 1101 to communicate with the UE or another network device. In uplink, an uplink signal from the UE is received through an antenna, demodulated by the transceiver 1101, and further processed by the controller/processor 1102, to restore service data and signaling information that are sent by the UE. In downlink, service data and a signaling message are processed by the controller/processor 1102 and demodulated by the transceiver 1101 to generate a downlink signal, and the downlink signal is transmitted to the UE through the antenna. The controller/processor 1102 is further configured to perform the signal sending method and the signal receiving method described in the foregoing embodiments. The controller/processor 1102 specifically performs steps 201 and 202 in FIG. 2 and steps 301 and 304 in FIG. 3. The network device may further include a memory 1103, which may be configured to store program code and data of the network device. The network device may further include a communication unit 1104, configured to support the network device to communicate with another network entity. The transceiver 1101 may implement functions of the receiving unit 701 and the sending unit 702 in FIG. 8, and a function of the receiving unit 901 in FIG. 9. The controller/processor 1102 may implement a function of the determining unit 902 in FIG. 9.

It may be understood that, FIG. 11 merely shows a simplified design of the network device. During actual application, the network device may include any quantity of transmitters, receivers, processors, controllers, memories, communication units, and the like, and all network devices that can implement the present invention shall fall within the protection scope of the present invention.

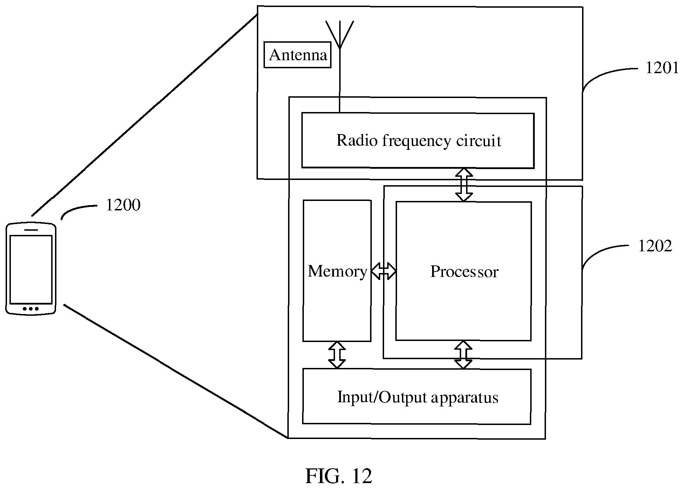

FIG. 12 is a schematic diagram of a structure of a terminal device 1200 according to an embodiment of this application. The terminal device may perform operations performed by the terminal device in FIG. 3 and FIG. 4, and operations performed by the terminal device in the foregoing embodiments.

For ease of description, FIG. 12 shows only main components of the terminal device. As shown in FIG. 12, the terminal device 1200 includes a processor, a memory, a radio frequency circuit, an antenna, and an input/output apparatus. The processor is mainly configured to: process a communication protocol and communication data, control the entire terminal device, execute a software program, and process data of the software program, for example, configured to support the terminal device in executing the procedure described in FIG. 3 or FIG. 4. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The terminal device 1200 may further include the input/output apparatus, such as a touchscreen, a display screen, or a keyboard, and is mainly configured to: receive data entered by a user, and output data to the user. It should be noted that some types of terminal devices may have no input/output apparatus.

After the terminal device is powered on, the processor may read a software program in a storage unit, explain and execute instructions of the software program, and process data of the software program. When data needs to be sent in a wireless manner, after the processor performs baseband processing on the to-be-sent data, the processor outputs a baseband signal to a radio frequency circuit. After performing radio frequency processing on the baseband signal, the radio frequency circuit sends a radio frequency signal through an antenna in a form of an electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art can understand that, for ease of description, FIG. 12 shows only one memory and one processor. In an actual terminal device, there may be a plurality of processors and a plurality of memories. The memory may also be referred to as a storage medium, a storage device, or the like. This is not limited in the embodiments of this application.

In an optional implementation, the processor may include a baseband processor and a central processing unit (central processing unit, CPU). The baseband processor is mainly configured to process a communication protocol and communication data. The CPU is mainly configured to: control the entire terminal device, execute a software program, and process data of the software program. Optionally, the processor may alternatively be a network processor (network processor, NP) or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory may include a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

For example, in this embodiment of this application, the antenna and the radio frequency circuit that have a transceiver function may be considered as a transceiver unit 1201 of the terminal device 1200, and the processor having a processing function may be considered as a processing unit 1202 of the terminal device 1200.

As shown in FIG. 12, the terminal device 1200 may include the transceiver unit 1201 and the processing unit 1202. The transceiver unit may also be referred to as a transceiver, a transceiver machine, a transceiver apparatus, or the like. Optionally, a component that is in the transceiver unit 1201 and that is configured to implement a receiving function may be considered as a receiving unit, and a component that is in the transceiver unit 1201 and that is configured to implement a sending function may be considered as a sending unit. In other words, the transceiver unit 1201 includes the receiving unit and the sending unit. For example, the receiving unit may also be referred to as a receiver machine, a receiver, or a receiver circuit, and the sending unit may be referred to as a transmitter machine, a transmitter, or a transmitter circuit.

In some embodiments, the transceiver unit 1201 and the processing unit 1202 may be integrated into one component, or may be separated as different components. In addition, the processor and the memory may be integrated into one component, or may be separated as different components.

It may be understood that the transceiver unit 1201 may be configured to perform a sending operation and a receiving operation of the terminal device in the foregoing method embodiments, and the processing unit 1202 is configured to perform an operation other than the receiving and sending operations of the terminal device in the foregoing method embodiments.

For example, the transceiver unit 1201 may be configured to perform the sending and receiving operations of 301, 303, and 304 in FIG. 3, and the sending and receiving operations of 403, 405, and 406 in FIG. 4; and the processing unit 1202 may be configured to perform the operation of 302 in FIG. 3, and may be further configured to perform the operations of 401, 402, and 404 in FIG. 4. The terminal devices in FIG. 8 and FIG. 10 each may use the structure in FIG. 12. In FIG. 8, functions of the receiving unit 801 and the sending unit 802 are implemented by the transceiver unit 1201, and functions of the listening unit 803 and the determining unit 804 are implemented by the processing unit 1202. In FIG. 10, a function of the sending unit 1001 is implemented by the transceiver unit 1201, and a function of the listening unit 1002 is implemented by the processing unit 1202.

It may be understood that for an implementation of the terminal device in this embodiment of this application, refer to the foregoing embodiments. Details are not described herein again.

An embodiment of this application further provides a computer-readable storage medium. The computer-readable storage medium stores instructions. When the instructions are run on a computer, the computer is enabled to perform the signal receiving method provided in the foregoing embodiments.

Optionally, when the foregoing instructions are run on the computer, the following may be implemented: sending scheduling information to a terminal device, where the scheduling information includes first indication information for time domain positions of M time units, and M is an integer greater than 1; and receiving a first signal in N time units in the M time units, where N is an integer greater than 0 and not greater than M.

Optionally, when the foregoing instructions are run on the computer, the following may be implemented: receiving a first signal in N time units in M time units, where M is an integer greater than 1, and N is an integer greater than 1 and not greater than M.

An embodiment of this application further provides a computer-readable storage medium. The computer-readable storage medium stores instructions. When the instructions are run on a computer, the computer is enabled to perform the signal sending method provided in the foregoing embodiments.

Optionally, when the foregoing instructions are run on the computer, the following may be implemented: receiving scheduling information from a network device, where the scheduling information includes first indication information for time domain positions of M time units, and M is an integer greater than 1; and sending a first signal to the network device in N time units in the M time units, where N is an integer greater than 0 and not greater than M.

Optionally, when the foregoing instructions are run on the computer, the following may be implemented: sending a first signal to a network device in N time units in M time units, where M is an integer greater than 1, and N is an integer greater than 1 and not greater than M.

An embodiment of this application provides a computer program product including instructions. When the computer program product runs on a computer, the computer is enabled to perform the signal sending method provided in the foregoing embodiments.

An embodiment of this application provides a computer program product including instructions. When the computer program product runs on a computer, the computer is enabled to perform the signal receiving method provided in the foregoing embodiments.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A signal receiving method, comprising:
sending, by a network device, scheduling information to a terminal device, wherein the scheduling information comprises first indication information, the first indication information is used to indicate time domain positions of M time units, and M is an integer greater than 1; and
receiving a first signal in N time units in the M time units, wherein N is an integer greater than 0 and not greater than M.

2. The method according to claim 1, wherein the first signal comprises channel state information CSI and/or uplink data.

3. The method according to claim 1 or 2, wherein the scheduling information further comprises second indication information, and the second indication information is used to indicate time domain positions of the N time units.

4. A signal sending method, comprising:
receiving, by a terminal device, scheduling information from a network device, wherein the scheduling information comprises first indication information, the first indication information is used to indicate time domain positions of M time units, and M is an integer greater than 1; and
sending a first signal to the network device in N time units in the M time units, wherein N is an integer greater than 0 and not greater than M.

5. The method according to claim 4, wherein the first signal comprises channel state information CSI and/or uplink data.

6. The method according to claim 4 or 5, wherein the scheduling information further comprises second indication information, and the second indication information is used to indicate time domain positions of the N time units.

7. The method according to claim 6, wherein the first signal comprises the CSI and does not comprise the uplink data; and before the sending a first signal to the network device in N time units in the M time units, the method further comprises:
determining the time domain positions of the M time units based on a first configuration list and/or the first indication information; and determining the time domain positions of the N time units based on a second configuration list and/or the second indication information.

8. The method according to claim 6, wherein the first signal comprises the uplink data; and before the sending a first signal to the network device in N time units in the M time units, the method further comprises:
determining the time domain positions of the M time units based on a first configuration list and/or the first indication information; and determining the time domain positions of the N time units based on the time domain positions of the M time units and/or the second indication information.

9. The method according to claim 6, wherein the first signal comprises the uplink data; and before the sending a first signal to the network device in N time units in the M time units, the method further comprises:
determining the time domain positions of the M time units based on a first configuration list and/or the first indication information; and determining the time domain positions of the N time units based on the first configuration list and/or the second indication information.

10. A signal receiving method, comprising:
receiving, by a network device, a first signal in N time units in M time units, wherein M is an integer greater than 1, and N is an integer greater than 1 and not greater than M.

11. A signal sending method, comprising:
sending, by a terminal device, a first signal to a network device in N time units in M time units, wherein M is an integer greater than 1, and N is an integer greater than 1 and not greater than M.

12. The method according to claim 10 or 11, wherein the first signal comprises channel state information CSI and/or uplink data.

13. A network device, comprising:
a sending unit, configured to send scheduling information, wherein the scheduling information comprises first indication information for time domain positions of M time units, and M is an integer greater than 1; and
a receiving unit, configured to receive a first signal in N time units in the M time units, wherein N is an integer greater than 0 and not greater than M.

14. The network device according to claim 13, wherein the first signal comprises channel state information CSI and/or uplink data.

15. The network device according to claim 13 or 14, wherein the scheduling information further comprises second indication information, and the second indication information is used to indicate time domain positions of the N time units.

16. A terminal device, comprising:
a receiving unit, configured to receive scheduling information from a network device, wherein the scheduling information comprises first indication information for time domain positions of M time units, and M is an integer greater than 1; and
a sending unit, configured to send a first signal to the network device in N time units in the M time units, wherein N is an integer greater than 0 and not greater than M.

17. The terminal device according to claim 16, wherein the first signal comprises channel state information CSI and/or uplink data.

18. The terminal device according to claim 16 or 17, wherein the scheduling information further comprises second indication information, and the second indication information is used to indicate time domain positions of the N time units.

19. The terminal device according to claim 18, wherein the first signal comprises the CSI and does not comprise the uplink data; and the terminal device further comprises:
a determining unit, configured to: determine the time domain positions of the M time units based on a first configuration list and/or the first indication information; and determine the time domain positions of the N time units based on a second configuration list and/or the second indication information.

20. The terminal device according to claim 18, wherein the first signal comprises the uplink data; and the terminal device further comprises:
a determining unit, configured to: determine the time domain positions of the M time units based on a first configuration list and/or the first indication information; and determine the time domain positions of the N time units based on the time domain positions of the M time units and/or the second indication information.

21. The terminal device according to claim 18, wherein the first signal comprises the uplink data; and the terminal device further comprises:
a determining unit, configured to: determine the time domain positions of the M time units based on a first configuration list and/or the first indication information; and determine the time domain positions of the N time units based on the first configuration list and/or the second indication information.

22. A network device, comprising:
a receiving unit, configured to receive a first signal in N time units in M time units, wherein M is an integer greater than 1, and N is an integer greater than 1 and not greater than M.

23. The terminal device according to claim 22, wherein the first signal comprises channel state information CSI and/or uplink data.

24. A terminal device, comprising:
a sending unit, configured to send a first signal to a network device in N time units in M time units, wherein M is an integer greater than 1, and N is an integer greater than 1 and not greater than M.

25. The terminal device according to claim 24, wherein the first signal comprises channel state information CSI and/or uplink data.

26. A communication device, comprising a memory and a processor, wherein the memory is configured to store a program, and the processor is configured to execute the program stored in the memory; and when the program is executed, the processor is configured to perform the method according to any one of claims 1 to 3 or perform the method according to claim 10.

27. A communication apparatus, comprising a processor and an interface circuit, wherein
the interface circuit is configured to receive code instructions and transmit the code instructions to the processor, and the processor runs the code instructions to perform the method according to any one of claims 1 to 3 or perform the method according to claim 10.

28. A communication apparatus, comprising a memory and a processor, wherein the memory is configured to store a program, and the processor is configured to execute the program stored in the memory; and when the program is executed, the processor is configured to perform the method according to any one of claims 4 to 9 or perform the method according to any one of claims 11 and 12.

29. A communication apparatus, comprising a processor and an interface circuit, wherein
the interface circuit is configured to receive code instructions and transmit the code instructions to the processor, and the processor runs the code instructions to perform the method according to any one of claims 4 to 9 or perform the method according to any one of claims 11 and 12.

30. A readable storage medium, configured to store instructions, wherein when the instructions are executed, the method according to any one of claims 1 to 3 or the method according to claim 10 is implemented.

31. A readable storage medium, configured to store instructions, wherein when the instructions are executed, the method according to any one of claims 4 to 9 or the method according to any one of claims 11 and 12 is implemented.
